(19) Europäisches Patentamt / European Patent Office / Office européen des brevets

(11) **EP 3 716 235 A1**

(12) **EUROPEAN PATENT APPLICATION**
published in accordance with Art. 153(4) EPC

(43) Date of publication:
**30.09.2020 Bulletin 2020/40**

(51) Int Cl.:
*G07F 9/00* (2006.01)     *G06Q 30/06* (2012.01)

(21) Application number: **18895675.9**

(22) Date of filing: **25.10.2018**

(86) International application number:
**PCT/JP2018/039764**

(87) International publication number:
**WO 2019/130778 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2017 JP 2017253471**
**28.12.2017 JP 2017253472**

(71) Applicant: **V-Sync Co., Ltd.**
**Tokyo 104-0045 (JP)**

(72) Inventor: **IBE Takaya**
**Tokyo 104-0045 (JP)**

(74) Representative: **Schlief, Thomas P.**
**Canzler & Bergmeier**
**Patentanwälte Partnerschaft mbB**
**Friedrich-Ebert-Straße 84**
**85055 Ingolstadt (DE)**

(54) **UNSTAFFED STORE SYSTEM**

(57)     Provided is an unstaffed store system capable of implementing business transactions that are safe and smooth for both stores and users. The unstaffed store system comprises: a selling device for selling a product to a visiting user; an automatic warehouse for storing the product to be sold by the selling device; and a management server for managing the product. The selling device displays product information on the product and a code image including a payment request for requesting payment on the product in association with each other. When the payment in response to the payment request included in the code image has been made, the management server transmits a transport instruction for transporting the product to the selling device to the automatic warehouse. The automatic warehouse transports the product to the selling device on the basis of the transport instruction.

*FIG. 1*

# Description

## Technical field

The present invention relates to an unmanned store system.

## Background art

Unmanned stores allow users visiting the stores to purchase products without help of store staff.

Patent Literature 1 discloses an unmanned retail store system constituted by connecting a user side information terminal, a retail store side information terminal, and a settlement organization side information terminal through a network.

## Citation list

## Patent Literature

PTL1: Japanese Patent Application Laid-Open No.2002-216046

## Summary of Invention

## Technical Problem

However, in the system of Patent Literature 1, the user transmits information on a product to be purchased and information on the account for settlement to the retail store side. Accordingly, the personal information of the user needs to be passed to the retail store side, and therefore the system of Patent Literature 1 has room for improvement in view of protection of the personal information of the user. In addition, in the system of Patent Literature 1, the user inputs a password to unlock the key of an unmanned merchandise warehouse to enter the merchandise warehouse and get the purchased product. Accordingly, there is a possibility that a suspicious object breaks into the merchandise warehouse, and therefore the system of Patent Literature 1 has room for improvement in view of the security of the merchandise warehouse.

The present invention has been achieved in view of the above-described problem, and therefore it is desirable to provide an unmanned store system capable of making a business transaction with high security between the store and the user.

## Solution to Problem

An aspect of the present invention provides an unmanned store system including: a selling apparatus configured to sell a product to a user visiting an unmanned store; an automatic warehouse configured to store the product sold by the selling apparatus; and a management server configured to manage the product stored in the automatic warehouse. The selling apparatus displays product information of the product stored in the automatic warehouse and a code image including a request for settlement of the product, corresponding the product information to the core image. When the settlement is made in response to the request for settlement included the code image, the management server transmits a conveyance command to the automatic warehouse to convey the product to the selling apparatus. The automatic warehouse conveys the product to the selling apparatus, based on the conveyance command transmitted from the management server.

The automatic warehouse transmits storage information indicating a storage state of the product to the management server. The management server determines a recommended product for the user based on the storage information transmitted from the automatic warehouse, and transmits the product information of the recommended product to the selling apparatus. The selling apparatus displays the product information of the recommended product transmitted from the management server and the code image including the request for settlement of the recommended product, corresponding the product information to the code image.

The automatic warehouse transmits operating information to the management server, the operating information indicating an operating state of a conveyance device configured to convey the product to the selling apparatus. he management server determines a recommended product for the user based on the operating information transmitted from the automatic warehouse, and transmits the product information of the recommended product to the selling apparatus. The selling apparatus displays the product information of the recommended product transmitted from the management server and the code image including the request for settlement of the recommended product, corresponding the product information to the code image.

The product information includes a price of the product. The storage information includes an inventory quantity of the product. The management server changes the price of the recommended product based on the inventory quantity, and transmits the product information of the recommended product at a changed price to the selling apparatus. The selling apparatus displays the product information and the code image including the changed price of the recommended product.

The product information includes a price of the product. The operating information includes an operating frequency of the conveyance device. The management server changes the price of the recommended product based on the operating frequency, and transmits a changed price of the recommended product to the selling apparatus. The selling apparatus displays the product information and the code image including the changed price of the recommended product.

An aspect of the present invention provides an unmanned store system including: a selling apparatus configured to display product information to a user visiting an unmanned store and sell a product; an automatic warehouse configured to store the product sold by the selling apparatus and convey the product to the selling apparatus; a management server configured to manage the product stored in the automatic warehouse; a settlement server configured to make settlement of the product designated by the user to purchase the product; and a user information terminal belonging to the user. The user information terminal transmits a request for settlement of the product to another information terminal which is different from the user information terminal. The settlement server makes settlement in response to the request for settlement transmitted from the another information terminal, and transmits a notification of settlement completion indicating that the settlement is completed to the management server. Upon receiving the notification of settlement completion transmitted from the settlement server, the management server conveys the product from the automatic warehouse to the selling apparatus.

The selling apparatus displays product information of the product stored in the automatic warehouse and a code image including the request for settlement of the product, corresponding the product information to the code image. When capturing the code image corresponding to the product, the user information terminal transmits the request for settlement included in the code image to the another information terminal. Upon receiving the request for settlement transmitted from the user information terminal, the another information terminal transmits the request for settlement to the settlement server.

The code image includes the product information of the product. The user information terminal transmits the request for settlement and the product information included in the captured code image to the another information terminal. Upon receiving the request for settlement and the product information transmitted from the user information terminal, the another information terminal displays the product information before transmitting the request for settlement to the settlement server.

When capturing the code image corresponding to the product, the user information terminal forwards the code image to the another information terminal. Upon receiving the code image transmitted from the user information terminal, the another information terminal decodes the code image to extract the request for settlement, and transmits the request for settlement to the settlement server.

Accordingly, the present invention provides an unmanned store system capable of making a business transaction with high security between the unmanned store and the user.

Brief Description of Drawings

Hereinafter, the accompanying drawings for some embodiments will be described.

Fig. 1 schematically illustrates the entire configuration of an unmanned store system according to Embodiment 1 of the present invention;
Fig. 2 illustrates the exterior configuration of an unmanned store according to Embodiment 1;
Fig. 3 is a front view illustrating a selling apparatus according to Embodiment 1;
Fig. 4 illustrates the functional configuration of the selling apparatus according to Embodiment 1;
Fig. 5 is a perspective view schematically illustrating the internal configuration of an automatic warehouse and a take-out port according to Embodiment 1;
Fig. 6A is a front view schematically illustrating shelves of the automatic warehouse illustrated in Fig. 5;
Fig. 6B is an overhead view schematically illustrating the automatic warehouse and the take-out port illustrated in Fig. 5;
Fig. 6C schematically illustrates the automatic warehouse and the take-out port illustrated in Fig. 5, viewed from the width direction;
Fig. 6D schematically illustrates a belt conveyor of the automatic warehouse illustrated in Fig. 5, viewed from the width direction;
Fig. 7 illustrates the functional configuration of the automatic warehouse according to Embodiment 1;
Fig. 8 illustrates the functional configuration of a management server according to Embodiment 1;
Fig. 9A illustrates product information, storage information, and sales information which are managed by the management server according to Embodiment 1;
Fig. 9B illustrates operating information managed by the management server according to Embodiment 1;
Fig. 10 is a flowchart illustrating a product supply process performed in the unmanned store system according to Embodiment 1;
Fig. 11 is a flowchart illustrating a supply control process according to Embodiment 1;
Fig. 12 is a flowchart illustrating a product sales process performed in the unmanned store system according to Embodiment 1;
Fig. 13 is a flowchart illustrating a recommended product determination process according to Embodiment 1;
Fig. 14 is a flowchart illustrating a settlement process according to Embodiment 1;
Fig. 15A schematically illustrates the screen of a user terminal before a request for settlement is transmitted to a settlement server in the settlement process according to Embodiment 1;
Fig. 15B schematically illustrates the screen of the user terminal when a notification of settlement completion is received in the settlement process according to Embodiment 1;
Fig. 16 is a destination determination process according to Embodiment 1;
Fig. 17A is a flowchart illustrating a conveyance control process according to Embodiment 1;

Fig. 17B a flowchart illustrating the conveyance control process continuing from Fig. 17A;

Fig. 18A illustrates an exemplary operation of the automatic warehouse in the conveyance control process according to Embodiment 1;

Fig. 18B illustrates the state of the automatic warehouse after the state illustrated in Fig. 18A;

Fig. 18C illustrates the state of the automatic warehouse after the state illustrated in Fig. 18B;

Fig. 18D illustrates the state of the automatic warehouse after the state illustrated in Fig. 18C;

Fig. 19A illustrates an exemplary operation of the automatic warehouse in the conveyance control process according to Embodiment 1;

Fig. 19B illustrates the state of the automatic warehouse after the state illustrated in Fig. 19A;

Fig. 19C illustrates the state of the automatic warehouse after the state illustrated in Fig. 19B;

Fig. 20A illustrates an exemplary operation of the automatic warehouse in the conveyance control process according to Embodiment 1;

Fig. 20B illustrates the state of the automatic warehouse after the state illustrated in Fig. 20A;

Fig. 20C illustrates the state of the automatic warehouse after the state illustrated in Fig. 20B;

Fig. 21 is a flowchart illustrating a settlement process according to Embodiment 2; and

Fig. 22 is a flowchart illustrating a recommended product determination process according to Embodiment 2.

Description of Embodiments

Hereinafter, embodiments of the present invention will be described with reference to the drawings. Note that the following embodiments illustrate some examples of the invention, and are not intended to limit the subject matter of the invention. Moreover, all the configurations and operations described in the embodiments are not necessarily essential to the invention.

With the present invention, the direction facing a user when the user visits a store and operates a selling apparatus in the store is referred to as "front", and the direction opposite to the front direction is referred to as "back." In addition, with the present embodiment, the height direction of the store is referred to as "upper", and the direction opposite to the upper is referred to as "lower." Moreover, with the present embodiment, the direction perpendicular to the front-to-back direction and the up-and-down direction is referred to as "width direction."

<Embodiment 1: Configuration of Unmanned store system>

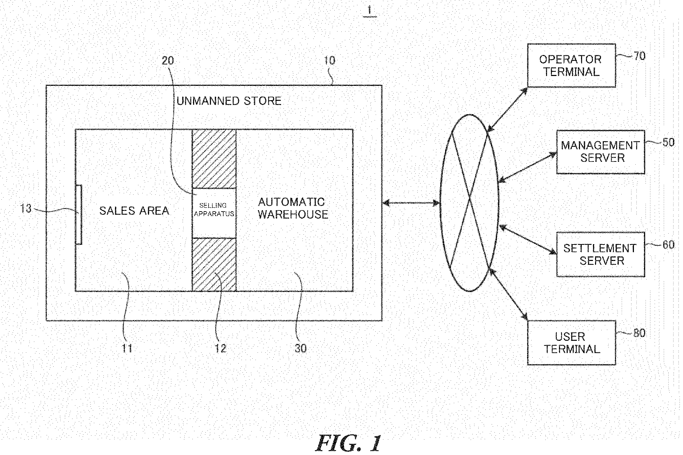

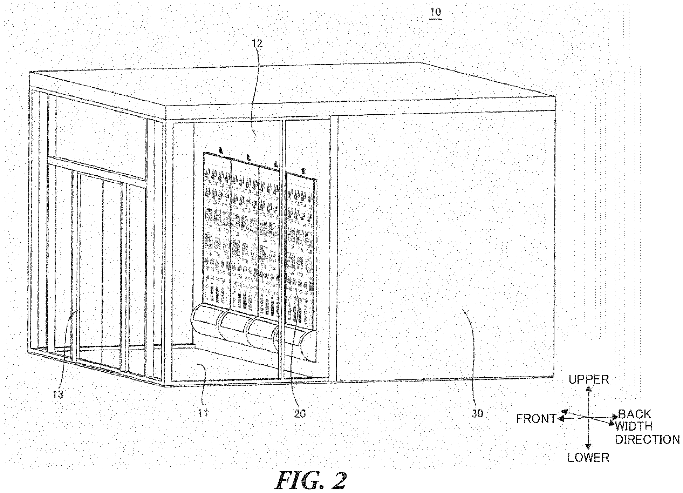

Fig. 1 schematically illustrates the entire configuration of an unmanned store system 1 according to Embodiment 1 of the present invention. Fig. 2 illustrates the exterior configuration of an unmanned store 10 according to Embodiment 1.

The unmanned store system 1 is configured to operate the unmanned store 10. The unmanned store 10 is configured to allow users visiting the unmanned store 10 to purchase various products such as food, miscellaneous goods, articles of daily use, and home electric appliances. To be more specific, the unmanned store 10 allows the users visiting the unmanned store 10 to purchase these various products without help of any person. The unmanned store 10 may be a retail store such as a convenience store and a supermarket where users can purchase products without store staff.

As illustrated in Fig. 1, the unmanned store system 1 includes the unmanned store 10, a management server 50, a settlement server 60, an operator terminal 70, and a user terminal 80. The unmanned store 10, the management server 50, the settlement server 60, the operator terminal 70, and the user terminal 80 are connected to a communication line forming a computer network.

As illustrated in Fig. 2, the unmanned store 10 includes a sales area 11 divided by a selling apparatus 20 configured to sell products to users visiting the unmanned store 10, and an automatic warehouse 30 configured to store products to be sold by the selling apparatus 20. A partition wall 12 divides between the sales area 11 and the automatic warehouse 30. A user visiting the unmanned store 10 passes through a gate 13 to enter the sales area 11. After purchasing a product, the user passes through the gate 13 to exit from the sales area 11. The user visiting the unmanned store 10 cannot enter the automatic warehouse 30.

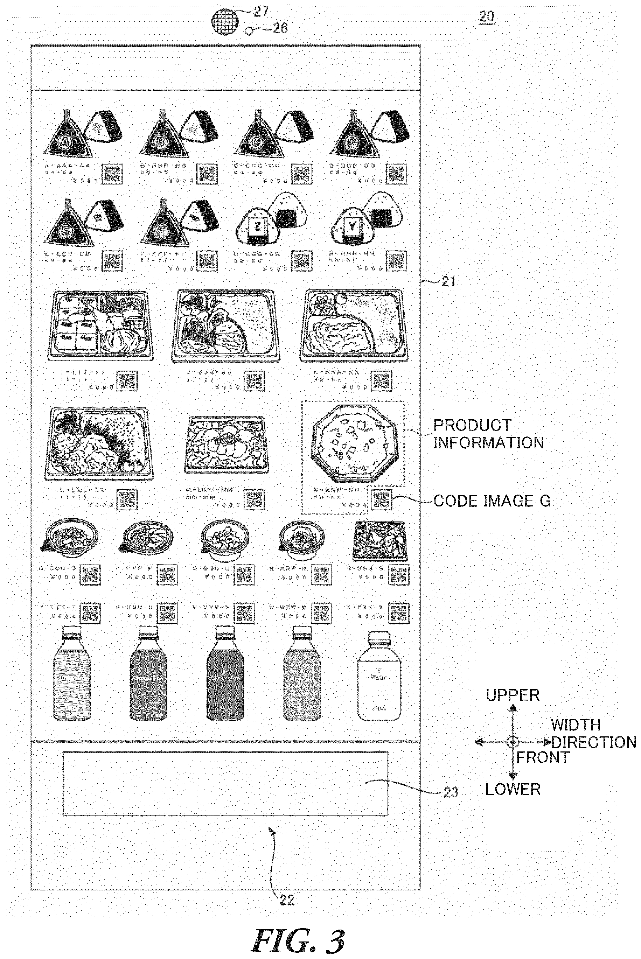

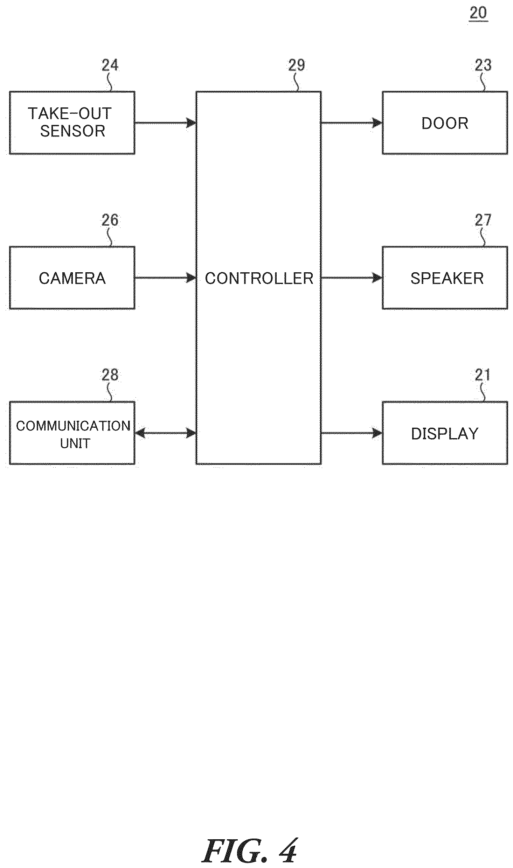

Fig. 3 is a front view illustrating the selling apparatus 20 according to Embodiment 1. Fig. 4 illustrates the functional configuration of the selling apparatus 20 according to Embodiment 1.

The selling apparatus 20 is configured to sell products without help of any person, and installed on the wall surface of the partition wall 12 facing the sales area 11. A plurality of selling apparatuses 20 may be disposed along the wall surface of the partition wall 12. There are a plurality of selling apparatuses 20 configured to sell products independently of each other.

As illustrated in Figs. 3 and 4, each of the plurality of selling apparatuses 20 includes a display 21, a take-out port 22, a door 23, a take-out port sensor 24, a camera 26, a speaker 27, a communication unit 28 and a controller 29.

The display 21 is configured to display information of the product sold by the selling apparatus 20. The display 21 is provided in the center of the front surface of the selling apparatus 20. The display 21 displays the product information of the product to be sold and a code image G including a request for settlement of the product, corresponding to the product information to the code image G.

The product information displayed on the display 21 includes the image, the name, the price and the description of the product to be sold. The request for settlement is executed to request the settlement server 60 to make settlement of the product by accessing the settlement server 60 from the user to pay for the product. The code image G is a two-dimensional code image acquired by encoding the request for settlement, the product information, and selling apparatus information. The selling apparatus information is identification information of the selling apparatus 20 with the code image G to identify the take-out port 22 of the selling apparatus 20. The selling apparatus information is common to the plurality of code images G displayed on the display 21 of one selling apparatus.

The display 21 may be a touch screen to receive the touch operation of the user. The display 21 can change the display style of the product information and the code image G of the product selected by the touch operation of the user. For example, the display 21 can extend the display area for the product selected by the user to display the product information in detail. Moreover, the display 21 can adjust the display area of the code image G to make it easy for the user to capture the code image G, and highlight the code image G to emphasize the code image G.

The take-out port 22 is an opening to take the product out of the selling apparatus 20 by the user. The take-out port 22 is provided in the lower part of the front surface of the selling apparatus 20. The take-out port 22 is provided with the door 23 to shield the opening from the sales area 11. The door 23 is automatically opened when the user can take the product out of the take-out port 22, and automatically closed after the user has taken the product out of the take-out port 22.

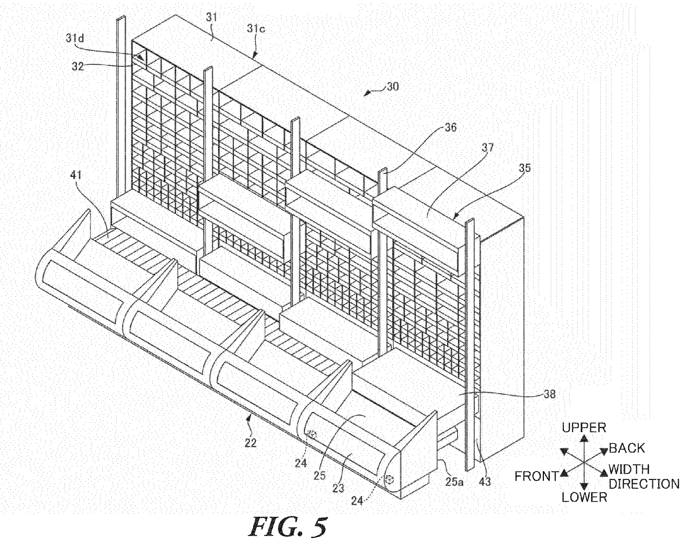

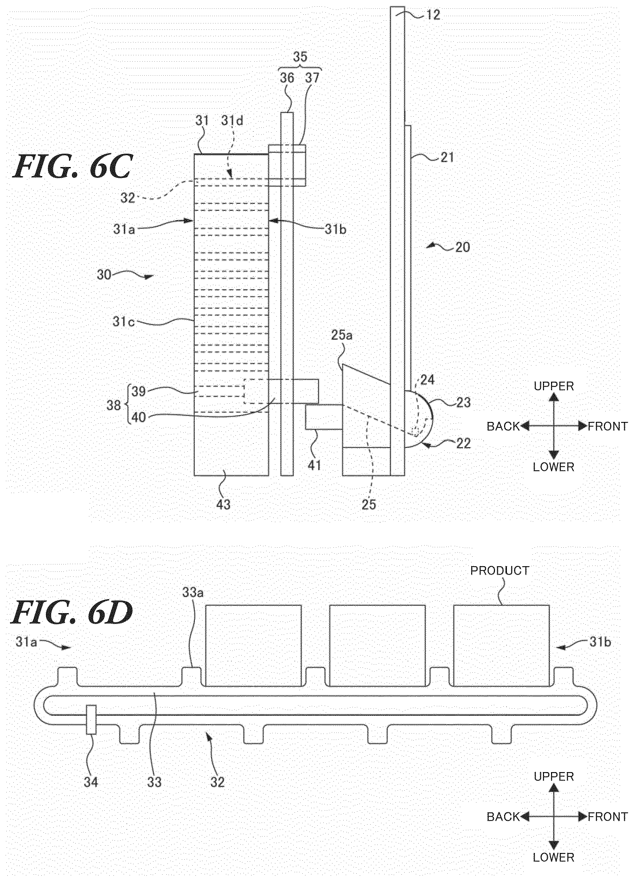

The door 23 is opened and closed, based on whether the take-out port sensor 24 provided on a tray 25 in the take-out port 22 detects the product. The take-out port sensor 24 may be a reflective or transmissive photosensor or a superimposed sensor. The tray 25 slants downward from back to front as illustrated in Figs. 5 and 6C, and configured to allow the product on the tray 25 to slide and then stay near the door 23.

The camera 26 is provided on the upper part of the front surface of the selling apparatus 20 to capture the images of the sales area 11 and the user. The camera 26 may monitor the sales area 11 for the purpose of security. In addition, the camera 26 may capture the image of the user approaching the selling apparatus 20 in order to display the product corresponding to the attribute of the user on the display 21. In this case, the camera 26 can capture the image of the user required to analyze the attribute of the user by facial recognition or gait recognition.

The speaker 27 is provided on the upper part of the front surface of the selling apparatus 20 and configured to emit sound to the sales area 11. The speaker 27 can emit the sound indicating that the product can be taken out of the take-out port 22 and inform the user of that fact.

The communication unit 28 is a communication module configured to allow wire or wireless communication between the automatic warehouse 30 and the management server 50.

The controller 29 is a control unit configured to generally control the operation of the selling apparatus 20 and includes a processor and a memory. In particular, the controller 29 is connected to the take-out port sensor 24, the door 23, and the speaker 27 as illustrated in Fig. 4. The controller 29 controls the opening and closing of the door 23 and also controls the operation of the speaker 27 that emits the sound indicating that the product can be taken out, based on the detection result by the take-out port sensor 24. In addition, the controller 29 is connected to the camera 26 to acquire the image captured by the camera 26. Moreover, the controller 29 is connected to the communication unit 28 and the display 21. Then, the controller 29 acquires the product information transmitted from the management server 50, from the communication unit 28, generates the code image G, and displays the code image G and the product information on the display 21, corresponding the code image G to the product information. Then, the controller 29 transmits a notification of take-out completion indicating that the user has taken the product out of the take-out port 22, from the communication unit 28 to the automatic warehouse 30.

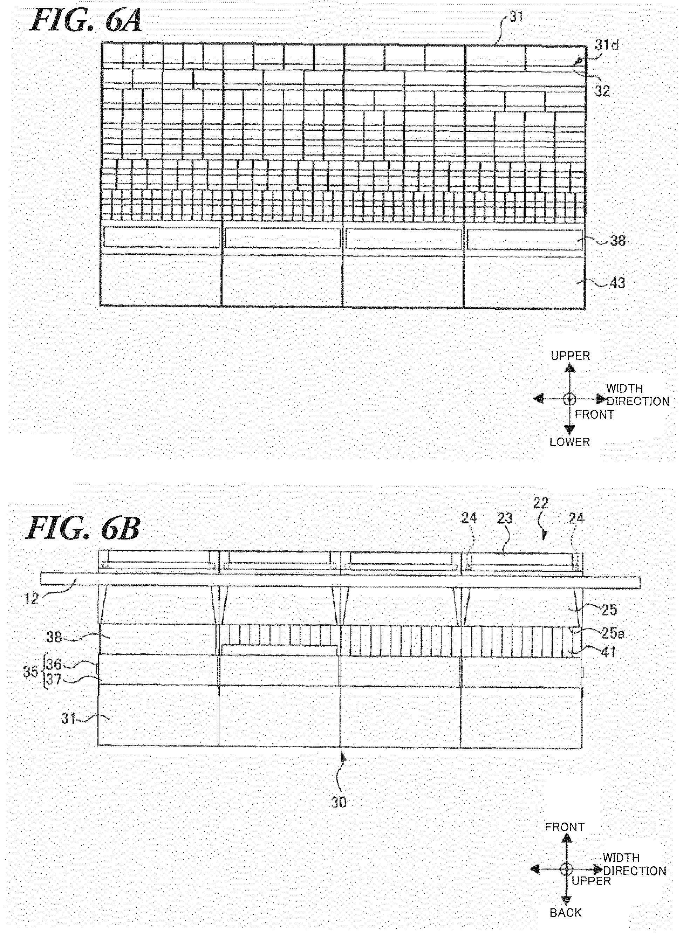

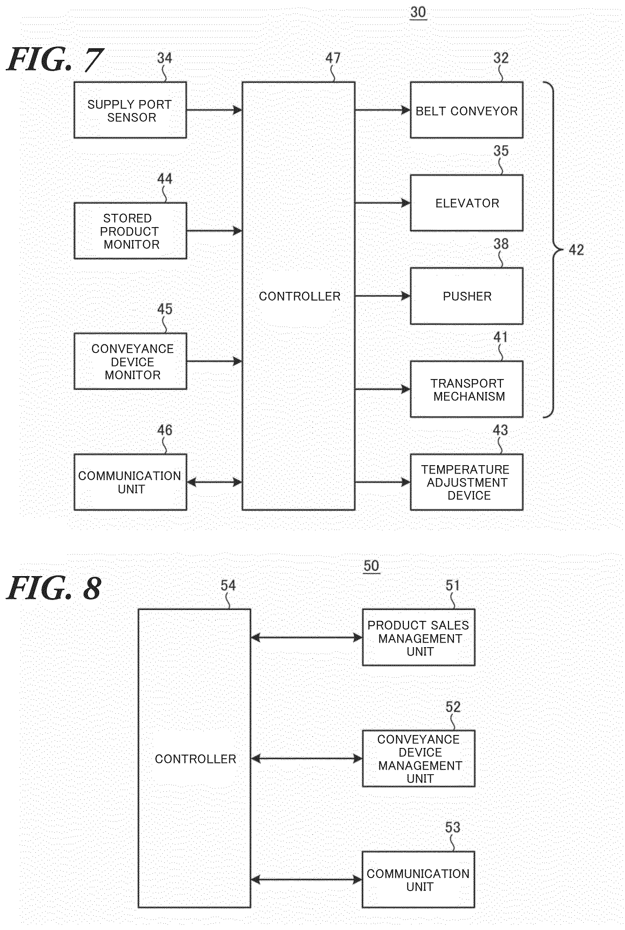

Fig. 5 is a perspective view schematically illustrating the internal configuration of the automatic warehouse 30 and the take-out port 22 according to Embodiment 1. Fig. 6A is a front view schematically illustrating shelves 31 of the automatic warehouse 30 illustrated in Fig. 5. Fig. 6B is an overhead view schematically illustrating the automatic warehouse 30 and the take-out port 22 illustrated in Fig. 5. Fig. 6C schematically illustrates the automatic warehouse 30 and the take-out port 22 illustrated in Fig. 5, viewed from the width direction. Fig. 6D schematically illustrates a belt conveyor 32 of the automatic warehouse 30 illustrated in Fig. 5, viewed from the width direction. Fig. 7 illustrates the functional configuration of the automatic warehouse 30 according to Embodiment 1.

The automatic warehouse 30 is configured to store the products sold by the selling apparatuses 20 and automatically convey the stored products to the selling apparatuses 20. The automatic warehouse 30 is shared by the plurality of selling apparatuses 20 and conveys the products to the take-out port 22 of each of the plurality of selling apparatuses 20.

As illustrated in Figs. 5 to 7, the automatic warehouse 30 includes the shelves 31, the belt conveyors 32, supply port sensors 34, elevators 35, pushers 38, a transport mechanism 41, a temperature adjustment device 43, a stored product monitor 44, a conveyance device monitor 45, a communication unit 46, and a controller 47.

The shelf 31 is configured to store the products sold by the selling apparatus 20. As illustrated in Fig. 6A, there are a plurality of shelves 31 arranged in the width direction of the shelf 31. The width direction of the shelf 31 is approximately parallel to the width direction of the selling apparatus 20. The plurality of shelves 31 can individually store the products which are sorted according to the preservation environment of the stored products. Alternatively, the plurality of shelves 31 are divided into sections to store the products according to the preservation environment of the stored products. In addition, the products selling well may be stored in the tier near the pusher 38 in each of the plurality of shelves 31.

As illustrated in Fig. 6C, a supply port 31a to supply the product to be stored to the shelf 31 is formed in the back of the shelf 31, that is, on the side opposite to the elevator 35. A back plate 31c of the shelf 31 can be open and closed, and the product is supplied to the shelf 31 from the supply port 31a by opening the back plate 31c. Meanwhile, an ejection port 31b to eject the stored product from the shelf 31 is formed in the front side of the shelf 31, that is, on the elevator 35 side.

In addition, a shelf plate 31d of the shelf 31 to store the products is constituted by the belt conveyor 32. A number of belt conveyers 32 are provided in the up-and-down direction and arranged in the width direction. That is, the products are placed on the belts 33 and therefore stored on the belt conveyor 32. The belt conveyor 32 is provided to move the belt 33 in the front-to-back direction. The front end of the belt conveyor 32 forms the lower end of the ejection port 31b, and the back end of the belt conveyor 32 forms the lower end of the supply port 31a. That is, the supply port 31a and the ejection port 31b are provided in each of the plurality of belt conveyors 32 arranged in the up-and-down direction and the width direction. The belt 33 is moved to the ejection port 31b so that the belt conveyor 32 can convey the product placed on the belt 33 to the ejection port 31b to eject the product from the shelf 31.

The supply port sensor 34 is provided near the supply port 31a of the belt conveyor 32 as illustrated in Fig. 6D. The supply port sensor 34 is configured to detect whether the product is located at the supply port 31a. The supply port sensor 34 may be a reflective or transmissive photosensor. Here, an ejection port sensor may be provided near the ejection port 31b in the same way as the supply port sensor 34 to detect whether the product is located at the ejection port 31b.

The belt 33 includes a plurality of supports 33a to support the products on the belt 33. Each of the supports 33a is provided to protrude upward from the surface of the belt 33 on which the product is placed. The plurality of supports 33a are spaced from each other at an interval according to a predetermined amount of movement of the belt 33 described later. To be more specific, the distance between two adjacent supports 33a in the front-to-back direction is designed to fit the size of the product on the belt 33 in the front-to-back direction. That is, the size of each of the plurality of products on the belt 33 is approximately the same in the front-to-back direction. In other words, the products in approximately the same size at least in the front-to-back direction are stored on one belt conveyor 32 constituting the shelf plate 31d of the shelf 31. It is preferred that the same products are stored on one belt conveyor 32 constituting the shelf plate 31d of the shelf 31.

As illustrated in Fig. 5, the elevator 35 is provided in front of each of the plurality of shelves 31 and configured to move up and down with respect to the plurality of belt conveyors 32 provided in tiers. The plurality of elevators 35 correspond to the plurality of shelves 31, respectively one-on-one, and also correspond to the plurality of take-out ports 22, respectively one-on-one.

The elevator 35 may include a pair of pillars 36 extending in the up-and-down direction and spaced from one another at a predetermined distance along the width direction of the shelf 31, and a bucket 37 provided to move between the pair of pillars 36 and configured to be able to accommodate the product. The bucket 37 is formed like a frame in a rectangular parallelepiped shape having a pass-through slot extending in the front-to-back direction. Alternatively, the bucket 37 may be formed into a flat plate, or an uneven plate by punching. Here, the bucket 37 may be provided with a stopper to prevent the product in the bucket 37 from dropping down.

The elevator 35 moves the bucket 37 to the tier of the shelf 31 at the level of the position of the stored product to be ejected from the shelf 31, and the bucket 37 receives the product conveyed by the belt conveyor 32 at this level. By this means, the product conveyed by the belt conveyor 32 can be put in the elevator 35.

The pusher 38 is a carrying-out mechanism to carry the product out of the elevator 35. As illustrated in Figs. 5 and 6A, the pusher 38 is provided in a predetermined tier of each of the plurality of shelves 31. The plurality of pushers 38 correspond to the plurality of elevators 35, respectively one-one-one, and also correspond to the plurality of shelves 31, respectively one-one-one.

As illustrated in Fig. 6C, the pusher 38 may include a cylinder 39 provided in the predetermined tier of the shelf 31 and configured to extend and contract in the front-to-back direction, and a contact part 40 provided at the front end of the cylinder 39 and configured to contact the product. The cylinder 39 and the contact part 40 penetrate the bucket 37 of the elevator 35 in the front-to-back direction. When the bucket 37 is formed into a plate, the cylinder 39 and the contact part 40 may be shaped to allow the product in the bucket 37 to be pushed out and moved forward.

The pusher 38 moves to allow the contact part 40 to protrude forward from the shelf 31, and moves backward to retract into the predetermined tier of the shelf 31 according to the extension and contraction of the cylinder 39. When the elevator 35 moves the bucket 37 to the predetermined tier of the shelf 31, the contact part 40 of the pusher 38 protrudes forward to push the product in the bucket 37 forward. By this means, the pusher 38 can carry the product out of the elevator 35.

In addition, the plurality of pushers 38 correspond to the take-out ports 22 of the plurality of selling apparatuses 20, respectively one-on-one. As illustrated in Figs. 5 and 6B, each of the plurality of pusher 38 is provided such that the take-out port 22 is located in a direction to face the product pushed out of the elevator 35 by the pusher 38. In other words, the plurality of pushers 38 push the products in the plurality of elevators 35 to the plurality of take-out ports 22, respectively. Moreover, each of the plurality of pushers 38 is configured such that the contact part 40 protrudes to reach a back end 25a of the tray 25 of the take-out port 22. By this means, each of the plurality of pusher 38 can not only carry the product out of the elevator 35 and put the product on the transport mechanism 41, but also bring the product to the take-out port 22. Moreover, even though the door 23 of each of the plurality of take-out port 22 is open, the pusher 38 protruding from behind can shield the tray 25 of the take-out port 22.

The transport mechanism 41 is configured to transport the product carried out of the elevator 35 along the width direction. The transport mechanism 41 is provided between the plurality of elevators 35 for the plurality of shelves 31 and the plurality of take-out port 22. The transport mechanism 41 may be, for example, a roller conveyor, a belt conveyor, and a truck. The transport mechanism 41 may be provided such that the level of its surface on which the product is placed is approximately the same as that of the predetermined tier of the shelf 31 in which the pusher 38 is provided. The transport direction of the transport mechanism 41 may be approximately orthogonal to the direction in which the pusher 38 pushes the product.

When one pusher 38 brings the product in one elevator 35 to the corresponding take-out port 22, the motion of the transport mechanism 41 keeps stopping to allow the one pusher 38 and the product to smoothly pass through the transport mechanism 41. On the other hand, when one pusher 38 brings the product in one elevator 35 to any other take-out port 22, the transport mechanism 41 starts to transport the product after the one pusher 38 puts the product on the transport mechanism 41 to transport the product thereon to the other take-out port 22. When the product on the transport mechanism 41 is transported to the location of the other take-out port 22 in the front-to-back direction, the transport operation of the transport mechanism 41 is stopped. Then, the product on the transport mechanism 41 is pushed forward by the pusher 38 corresponding to the other take-out port 22, and therefore can reach the other take-out port 22.

In this way, the automatic warehouse 30 conveys the product stored in the shelf 31 to the take-out port 22 of each of the selling apparatuses 20, by the cooperation of the belt conveyor 32, the elevator 35, the pusher 38, and the transport mechanism 41. With the present embodiment, the belt conveyor 32, the elevator 35, the pusher 38, and the transport mechanism 41 may be collectively referred to as "conveyance device 42."

The temperature adjustment device 43 is configured to adjust the temperatures of the products stored in the shelves 31. The temperature adjustment device 43 can adjust the temperature of the products for each of the shelves 31 according to the preservation environment of the stored products. For example, the temperature adjustment device 43 illustrated in Fig. 6A can adjust the temperatures of the products in the shelves 31 divided according to the preservation environment categorized into four: freezing storage; cold storage; room temperature storage; and heating storage. Alternatively, the temperature adjustment device 43 can adjust the temperature of the products in the shelves 31 divided according to the preservation environment of the stored products. The temperature adjustment device 43 may be a hot/cool heat pump.

The stored product monitor 44 is configured to monitor the storage state of the products stored in the shelves 31. The stored product monitor 44 may be any kind of sensor, and configured to create storage information indicating the storage state of the products stored in the shelves 31. To be more specific, the storage information indicates the position, the storage period and the inventory quantity of each of the plurality of products stored in the shelves 31.

The conveyance device monitor 45 is configured to monitor the operating state of the conveyance devices 42. The conveyance device monitor 45 may be any type of sensor, and is configured to create operating information indicating the operating states of the belt conveyors 32, the elevators 35, the pushers 38, and the transport mechanism 41 which are the conveyance devices 42. To be more specific, the operating information indicates the operating state, the operating time, and the operating frequency of each of the conveyance devices 42.

The communication unit 46 is a communication module configured to allow wire or wireless communication with the selling apparatus 20, the management server 50 and the operator terminal 70.

The controller 47 is a control unit configured to generally control the operation of the automatic warehouse 30 and includes a processor and a memory. In particular, as illustrated in Fig. 7, the controller 47 is connected to the conveyance devices 42 and the communication unit 46 to acquire a conveyance command transmitted from the management server 50, from the communication unit 46, and controls the operation of the conveyance devices 42 based on the acquired conveyance command. The conveyance command is to convey the product stored in the shelf 31 to the take-out port 22 of the selling apparatus 20. In addition, the controller 47 transmits a notification of conveyance completion indicating that the product has been conveyed to the take-out port 22 of the selling apparatus 20, from the communication unit 46 to the management server 50. In addition, the controller 47 is connected to the supply port sensor 34 to acquire a supply command transmitted from the operator terminal 70, from the communication unit 46, and controls the operation of the belt conveyor 32, based on the acquired supply command and the detection result by the supply port sensor 34. The supply command is to cause the operator to supply the shelf 31 with products.

In addition, the controller 47 is also connected to the stored product monitor 44 and the conveyance device monitor 45 to acquire the storage information and the operating information from the stored product monitor 44 and the conveyance device monitor 45, respectively, and transmits the information from the communication unit 46 to the management server 50. Moreover, the controller 47 is connected to the temperature adjustment device 43 to control the operation of the temperature adjustment device 43, based on the storage information acquired from the stored product monitor 44.

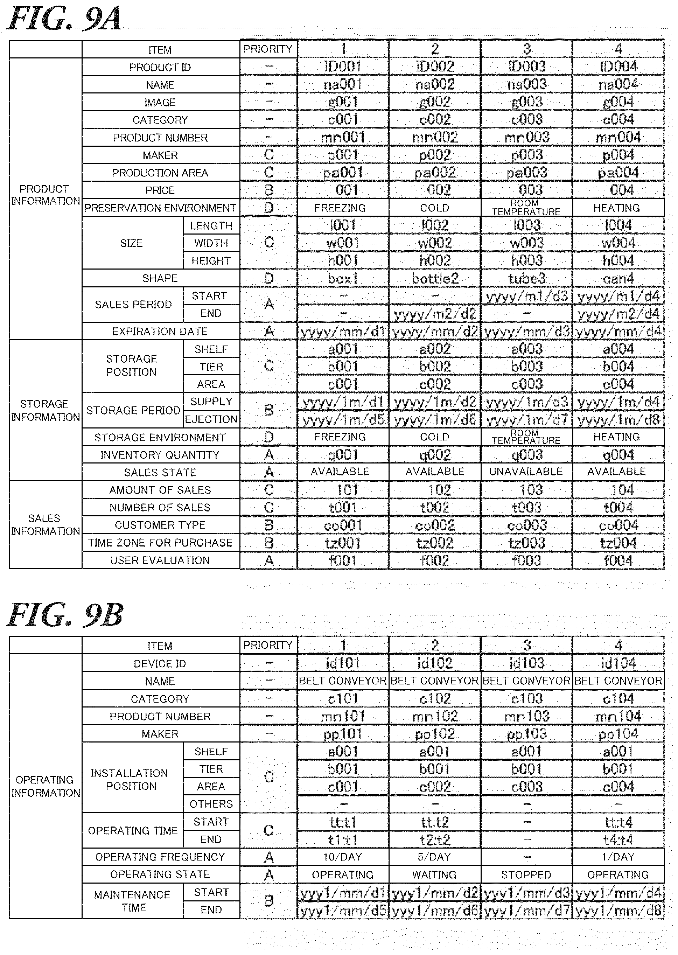

Fig. 8 illustrates the functional configuration of the management server 50 according to Embodiment 1. Fig. 9A illustrates the product information, the storage information, and the sales information which are managed by the management server 50 according to Embodiment 1. Fig. 9B illustrates the operating information managed by the management server 50 according to Embodiment 1.

The management server 50 is configured to manage the unmanned store 10. To be more specific, the management server 50 manages the products stored in the automatic warehouse 30, the conveyance devices 42 provided in the automatic warehouse 30, and the selling apparatuses 20 installed in the sales area 11. The management server 50 may manage a plurality of unmanned stores 10.

As illustrated in Fig. 8, the management server 50 includes a product sales management unit 51, a conveyance device management unit 52, a communication unit 53 and a controller 54.

The product sales management unit 51 includes a database configured to accumulate various pieces of information to manage the storage state and the sales state of the products in the unmanned store 10, and a management system of the database. The product sales management unit 51 manages at least the product information, the storage information, and the sales information.

As illustrated in Fig. 9A, the product information is categorized into items indicating various pieces of information about the attributes of the products, and recorded in the product sales management unit 51. The items of the product information may be, for example, the product ID (identification data), the name, the image, the category, the product number, the maker or producer, the production area, the price, the preservation environment, the size, the shape, the sales period and the expiration date of each of the products. The preservation environment is information indicating the optimum temperature environment for the storage such as freezing storage, cold storage, room temperature storage, and heating storage determined by the maker or producer.

The sales period includes the sales start time and the sales end time of the selling apparatus 20. Here, when no date is written both in the sales start time and the sales end time, the product is offered always but not for an only limited time.

As illustrated in Fig. 9A, the storage information is categorized into items indicating various pieces of information about the storage stats of the products, and recorded in the product sales management unit 51. The storage information is recorded corresponding to the product information (product ID). The items of the storage information may be, for example, the storage position, the storage period, the storage environment, the inventory quantity, and the sales state of the product. The storage position may be defined by the identification information of each of the shelves 31, the identification information of each of the tiers of the shelf 31, and the identification information of each of the storage areas of the tier. The storage period may include a supply time which is a date on which a product is supplied to the specific storage position of the shelf 31, and an ejection time which is a date on which a product is ejected from the specific storage position of the shelf 31. The storage environment is information indicating the temperature environment in which the product is actually stored, such as freezing storage, cold storage, room temperature storage, and heating storage. The sales state is information indicating whether the product is available for sale.

As illustrated in Fig. 9A, the sales information is categorized into various items of sales states of the product and recorded in the product sales management unit 51. The sales information is recorded corresponding to the product information (product ID). The items of the sales information may be, for example, the amount of sales, the number of sales, the customer type, the time zone for purchase, and the user evaluation in a predetermined period of time. The sales information may be POS (point of sales) data.

The conveyance device management unit 52 includes a database configured to accumulate various pieces of information to manage the operating states of the conveyance devices 42 of the automatic warehouse 30, and a management system of the database. The conveyance device management unit 52 manages at least the operating information.

As illustrated in Fig. 9B, the operating information is categorized into various items of the operating states of the conveyance devices 42, and recorded in the conveyance device management unit 52. The items of the operating information may include, for example, the device ID which is the identification information of the conveyance device 42, the name of the conveyance device 42, the classification, the product number, the maker, the installation position, the operating time, the operating frequency, the operating state, and the maintenance time of the conveyance device 42. The installation position is information of the position in which the conveyance device 42 is installed. When the conveyance device 42 is the belt conveyor 32, the installation position may be defined by the identification information of each of the shelves 31, the identification information of each of the tiers of the shelf 31, and the identification information of each of the storage areas of the tier, and may correspond to the storage position of the storage information. When the conveyance device 42 is the elevator 35, the installation position may be defined by the identification information of each of the shelves 31. When the conveyance device 42 is the transport mechanism 41, the installation position may be identification information indicating a specific space in the automatic warehouse 30. The operating time is information indicating the time of the start of operating the conveyance device 42 and the time of the end of operating the conveyance device 42. The operating frequency is information indicating the frequency at which the conveyance device 42 is operated in a predetermined period of time. The operating state is information indicating whether the conveyance device 42 is operating, waiting, or stopped. The maintenance time indicates the time of the start and the time of the end of the periodic maintenance of the conveyance device 42.

As illustrated in Figs. 9A and 9B, the items of each of the product information, the storage information, the sales information, and the operating information have priorities. The management server 50 can determine a recommended product for the user visiting the unmanned store 10, based on the product information, the storage information, the sales information and the operating information, as described later. Then, the management server 50 can display the product information of the determined recommended product on the selling apparatus 20 to advertise the product to the user visiting the unmanned store 10, so that it is possible to promote the sale of products. The priority is an index to determine which of the items is preferentially evaluated when the management server 50 determines the recommended product. The priority is predetermined by the management body of the unmanned store 10 or the management server 50 or the operator.

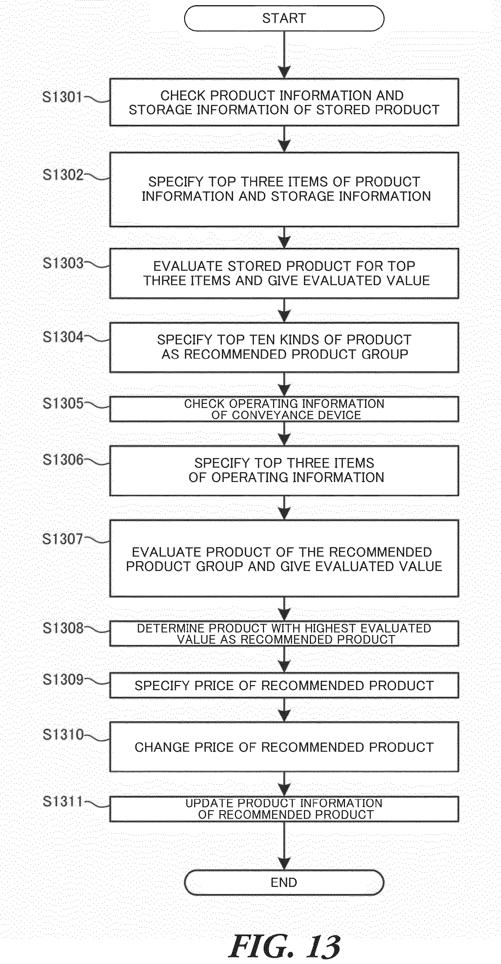

With the present embodiment, a process to determine the recommended product performed by the management server 50 may be referred to as "recommended product determination process." The recommended product determination process will be described in detail with reference to Fig. 13.

The communication unit 53 is a communication module configured to allow wire or wireless communication with the selling apparatus 20, the automatic warehouse 30, the settlement server 60 and the operator terminal 70.

The controller 54 is a control unit configured to generally control the operation of the management server 50, and includes a processor and a memory. In particular, the controller 54 is connected to the product sales management unit 51, the conveyance device management unit 52, and the communication unit 53 to acquire the product information, the sales information, the storage information and the operating information from the product sales management unit 51 and the conveyance device management unit 52. Then, the controller 54 determines the product to be supplied to the automatic warehouse 30 to sell the product by the selling apparatus 20, based on the acquired product information, sales information, storage information and operating information, creates a product supply command, and transmits the command from the communication unit 53 to the operator terminal 70. In addition, the controller 54 creates a sales command to sell the supplied product, and transmits the command from the communication unit 53 to the automatic warehouse 30 and the selling apparatus 20. The sales command is to start to sell the supplied product. In addition, the management server 50 transmits the product information of the product sold by the selling apparatus 20 from the communication unit 53 to the selling apparatus 20, and displays the product information on the display 21. Moreover, the management server 50 acquires a notification of settlement completion transmitted from the settlement server 60, creates a conveyance command, and transmits the conveyance command from the communication unit 53 to the automatic warehouse 30. The notification of settlement completion indicates that the settlement server 60 has made settlement in response to a request for settlement and the settlement of the product is completed.

The settlement server 60 is configured to make settlement of the product in response to the request for settlement. The settlement server 60 may belong to a settlement organization independent of the management body of the unmanned store 10 and the management server 50. The settlement server 60 is configured to be able to communicate with the management server 50 and the user terminal 80, make settlement of the product designated by the user for purchase, and transmit a notification of settlement completion to the management server 50. The user captures the code image G of the product displayed on the display 21 by using the user terminal 80, and transmits a request for settlement included in the code image G to the settlement server 60 to designate the product to be purchased.

The settlement server 60 makes settlement of the product by electronic settlement, but the settlement type is not limited and may include, for example, advance payment, immediate payment, and future payment. In addition, electronic money used for the electronic settlement may include legal currency, corporate currency (point), virtual currency, and a combination of them. The settlement server 60 accumulates the settlement history of each of the users, and can give the user a privilege corresponding to the settlement history.

The operator terminal 70 belongs to the operator managing the unmanned store 10. The operator terminal 70 is configured to allow communication with the management server 50 and the automatic warehouse 30, and can display the product information, the storage information, and the sales information of the product supplied to the automatic warehouse 30 to sell the product by the selling apparatus 20. In addition, the operator terminal 70 may be configured to communicate with the selling apparatus 20, the conveyance devices 42, and the management server 50 to remotely control them.

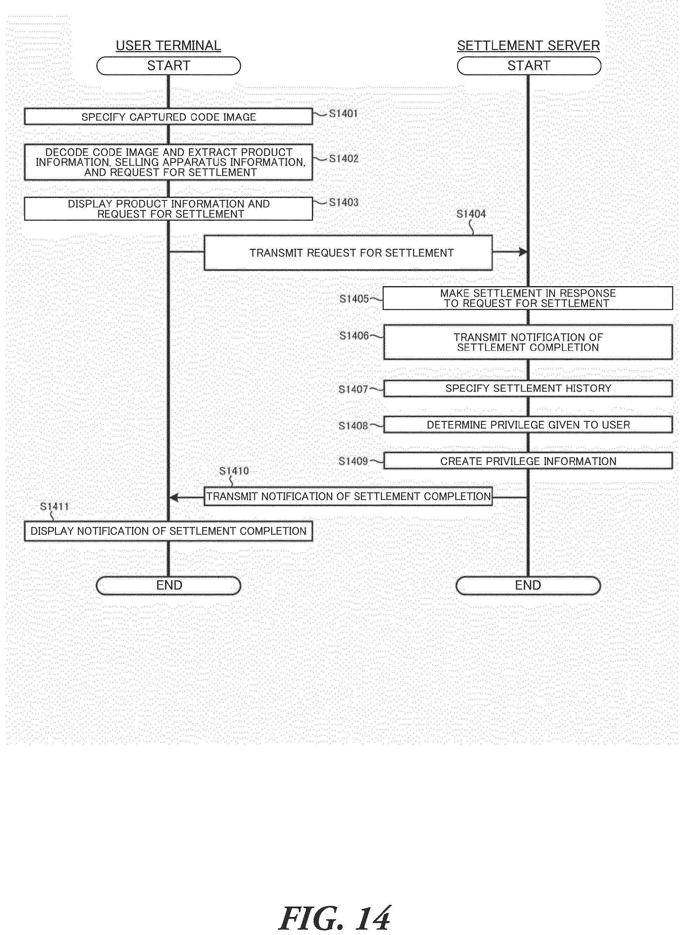

The user terminal 80 is used by the user visiting the unmanned store 10. A camera configured to be able to capture the code image G displayed on the display 21, and an application program to perform a settlement process with the settlement server 60 are built in the user terminal 80. The settlement process is performed between the user terminal 80 and the settlement server 60 to make settlement of the product. The settlement process will be described in detail later with reference to Fig. 14.

<Embodiment 1: Product supply process of Unmanned store system>

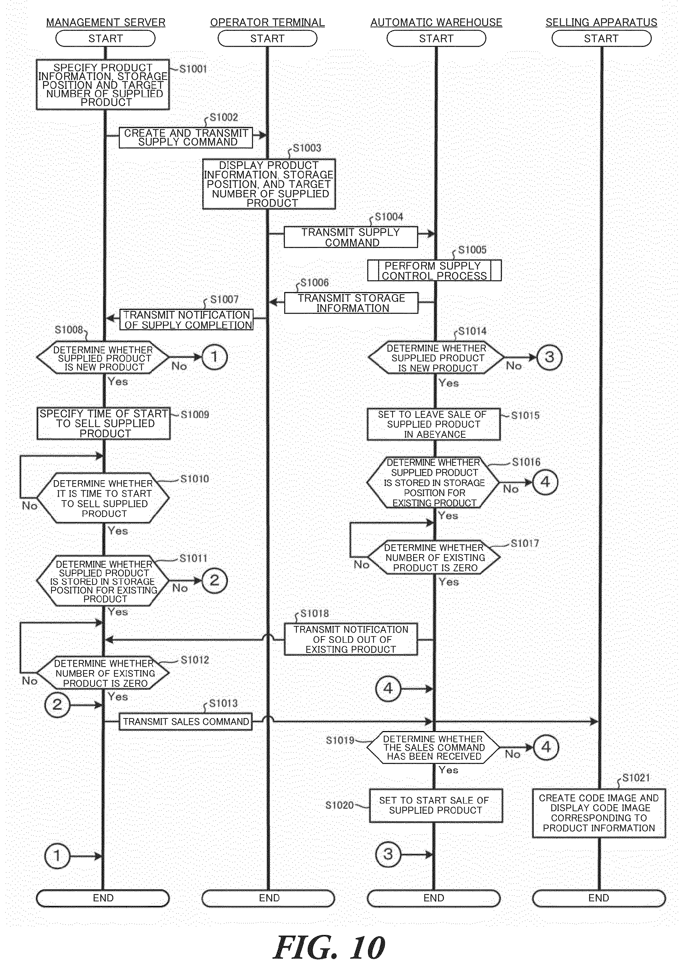

Fig. 10 is a flowchart illustrating a product supply process performed by the unmanned store system 1 according to Embodiment 1.

For the unmanned store system 1, the products sold by the selling apparatuses 20 are supplied to the shelves 31 of the automatic warehouse 30 by the operator. With the present embodiment, a process performed by the unmanned store system 1 to supply the products stored in the automatic warehouse 30 to the shelves 31 may be referred to as "product supply process." The product supplied to the shelf 31 may be "supplied product."

In addition, for the unmanned store system 1, the product which has been supplied before the product supply process may be already stored in the shelf 31, and therefore the product information of this product is displayed on the selling apparatus 20. With the present embodiment, the product supplied before the product supply process and already stored in the shelf 31 may be referred to as "existing product."

Here, the product supply process illustrated in Fig. 10 merely describes a product supply process in a case where one product is supplied, and the product supply process for any other product and a product sales process may be performed in parallel.

In step 1001, the management server 50 specifies the product information, the storage position, and the target quantity of the supplied product. For example, the management server 50 specifies the storage position of the supplied product in the shelf 31, based on the product size and the preservation environment included in the product information of the supplied product.

In step 1002, the management server 50 creates a supply command including the specified product information, storage position and target quantity, and transmits the supply command to the operator terminal 70.

Upon receiving the supply command transmitted from the management server 50, the operator terminal 70 displays the product information, the storage position, and the target quantity of the supplied product included in the received supply command in step 1003. The operator can supply the product to the shelf 31, based on the displayed product information, storage position, and target quantity.

In step 1004, the operator terminal 70 transmits the supply command to supply the product to the automatic warehouse 30. The operator may change the mode of the automatic warehouse 30 to a product supply mode by operating the operator terminal 70 and transmit the supply command to the automatic warehouse 30. Alternatively, the operator may operate a predetermined operation panel provided in advance in the automatic warehouse 30 to change the mode of the automatic warehouse 30 to the product supply mode, and transmit the supply command to the automatic warehouse 30. The operator may supply the product to the shelf 31 by hand after the transmission of the supply command.

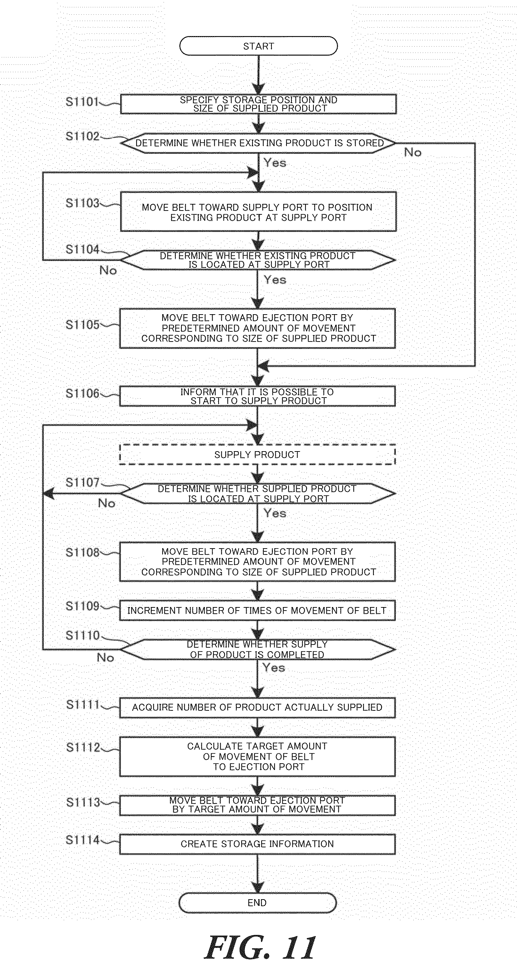

Upon receiving the supply command transmitted from the operator terminal 70, the automatic warehouse 30 performs a supply control process in step 1005. The supply control process is performed by the automatic warehouse 30 to properly supply the product to the shelf 31. The supply control process will be described in detail later with reference to Fig. 11.

After the supply control process, the automatic warehouse 30 transmits the storage information of the supplied product to the operator terminal 70 in step 1006. The operator terminal 70 receives the storage information transmitted from the automatic warehouse 30, and can display the received storage information. The operator can check the result of the actual supply of the product, based on the displayed storage information. Then, the automatic warehouse 30 moves the step to step 1014.

In step 1007, the operator terminal 70 transmits a notification of supply completion including the storage information of the supplied product to the management server 50. The notification of supply completion indicates that the product has been properly supplied to the shelf 31 and the supply is completed. The management server 50 receives the notification of supply completion from the operator terminal 70, and updates the recorded storage information, based on the storage information included in the received notification of supply completion. Then, the operator terminal 70 ends the process.

In step 1008, the management server 50 checks the product information of the supplied product, and determines whether the supplied product is a new product different from the existing product. When determining that the supplied product is a new product, the management server 50 moves the step to step 1009. On the other hand, when the supplied product is not a new product, the management server 50 determines that the supplied product is the same as the existing product, and therefore can be supplied to replenish the existing product, and then ends the process.

In the step 1009, the management server 50 checks the product information of the supplied product to specify the time of start to sell the supplied product.

In step 1010, the management server 50 determines whether it is time to start to sell the supplied product. When determining that it is not time to start to sell the supplied product, the management server 50 waits to perform the product supply process until it is time to start to sell the supplied product. On the other hand, when determining that it is time to start to sell the supplied product, the management server 50 moves the step to step 1011.

In the step 1011, the management server 50 checks the storage information of the supplied product, and determines whether the supplied product is stored in the storage position for the existing product. In other words, the management server 50 determines whether there is any existing product in the storage position for the supplied product. When there is no existing product in the storage position for the supplied product, the management server 50 moves the step to step **1013.** On the other hand, when there is the existing product in the storage position for the supplied product, the management server 50 moves the step to step 1012.

In the step 1012, the management server 50 determines whether the number of the existing product in the storage position for the supplied product is zero. The management server 50 determines whether a notification of sold out of the existing product in the storage position for the supplied product is received to determine whether the number of the existing product in the storage position for the supplied product is zero. The management server waits to perform the product supply process until the number of the existing product in the storage position for the supplied product is zero. On the other hand, when the number of the existing product in the storage position for the supplied product is zero, the management server 50 moves the step to the step 1013.

In the step 1013, the management server 50 creates a sales command including the product information of the supplied product, and transmits the sales command to the automatic warehouse 30 and the selling apparatus 20, after the number of the existing product in the storage position for the supplied product is zero. Then, the management server 50 ends the process.

In the step 1014, the automatic warehouse 30 checks the product information of the supplied product, and determines whether the supplied product is a new product different from the existing product. When determining that the supplied product is a new product, the automatic warehouse 30 moves the step to step 1015. On the other hand, when the supplied product is not a new product, the automatic warehouse 30 determines that the supplied product is the same as the existing product, and therefore can be supplied to replenish the existing product, and then end the process.

In the step 1015, the automatic warehouse 30 sets to leave the sale of the supplied product in abeyance until the sales command to sell the supplied product is received from the management server 50.

In step 1016, the automatic warehouse 30 checks the storage information of the supplied product, and determines whether the supplied product is stored in the storage position for the existing product. In other words, the automatic warehouse 30 determines whether there is any existing product in the storage position for the supplied product. When determining that there is no existing product in the storage position for the supplied product, the automatic warehouse 30 moves the step to step 1019. On the other hand, when there is any existing product in the storage position for the supplied product, the automatic warehouse 30 moves the step to step 1017.

In the step 1017, the automatic warehouse 30 determines whether the number of existing product in the storage position for the supplied product is zero. The automatic warehouse 30 waits to perform the product supply process until the number of existing product in the storage position for the supplied product is zero. On the other hand, when determining that the number of existing product in the storage position for the supplied product is zero, the automatic warehouse 30 moves the step to step 1018.

In the step 1018, the automatic warehouse 30 transmits the notification of sold out of the existing product including the storage information indicating that the inventory quantity of the supplied product is zero, to the management server 50.

In step 1019, the automatic warehouse 30 determines whether the sales command to sell the supplied product has been received from the management server 50. When determining that the sales command to sell the supplied product has not been received from the management server 50, the automatic warehouse 30 waits to perform the product supply process until the sales command transmitted from the management server 50 is received. On the other hand, when determining that the sales command transmitted from the management server 50 has been received, the automatic warehouse 30 moves the step to step 1020.

In the step 1020, the automatic warehouse 30 sets to start the sale of the supplied product left in abeyance, after the sales command transmitted from the management server 50 has been received. Then, the automatic warehouse 30 ends the process.

Upon receiving the sales command to sell the supplied product transmitted from the management server 50, the selling apparatus 20 encodes the product information of the supplied product included in the received sales command, the request for settlement of the supplied product, and the selling apparatus information, and generates the code image G in step 1021. The selling apparatus 20 displays the created code image G and the product information of the supplied product, corresponding the code image G to the product information. Then, the selling apparatus 20 ends the process. In this way, when the supplied product is different from the existing product already stored on the belt conveyor 32, the selling apparatus 20 can display the product information of the supplied product after there is no existing product and it is time to start to sell the supplied product.

Fig. 11 is a flowchart illustrating the supply control process according to Embodiment 1.

Upon receiving the supply command to supply the product from the operator terminal 70, the automatic warehouse 30 specifies the storage position to store the supplied product and the size of the supplied product in step 1101.

In step 1102, the automatic warehouse 30 determines whether the existing product is stored on the belt conveyor 32 at the storage position for the supplied product. When determining that the existing product is not stored, the automatic warehouse 30 moves the step to step 1106. On the other hand, when determining that the existing product is stored, the automatic warehouse 30 moves the step to step **1103.** Here, the size of the existing product stored on the belt conveyor 32 at the storage position for the supplied product is the same as that of the supplied product in the front-to-back direction.

In the step 1103, the automatic warehouse 30 moves the belt 33 toward the supply port 31a to position the existing product at the supply port 31a.

In the step 1104, the automatic warehouse 30 determines whether the existing product is located at the supply port 31a, based on the detection result by the supply port sensor 34. When determining that the existing product is not located at the supply port 31a, the automatic warehouse 30 moves the step to the step 1103. On the other hand, when determining that the existing product is located at the supply port 31a, the automatic warehouse 30 moves the step to step 1105.

In the step 1105, the automatic warehouse 30 moves the belt 33 toward the ejection port 31b by a predetermined amount of movement corresponding to the size of the supplied product. The predetermined amount of movement is equivalent to the distance between two adjacent supports 33a of the belt 33 at the storage position for the supplied product in the front-to-back direction. This distance corresponds to the size of the supplied product in the front-to-back direction. By this means, the automatic warehouse 30 can make a space for one supplied product near the supply port 31a on the belt 33 just behind the existing product.

In the step 1106, the automatic warehouse 30 informs the operator that it is possible to start to supply the product. To be more specific, the automatic warehouse 30 informs that it is possible to start to supply the product by the display on a predetermined operation panel, or the transmission to the operator terminal 70. The operator can put the supplied product in the supply port 31a by hand.

In step 1107, the automatic warehouse 30 determines whether the supplied product is located at the supply port 31a, based on the detection result by the supply port sensor 34. When determining that the supplied product is not located at the supply port 31a, the automatic warehouse 30 waits until the supply port sensor 34 detects the supplied product being located at the supply port 31a. On the other hand, when determining that the supplied product is located at the supply port 31a, the automatic warehouse 30 moves the step to step 1108.

In the step 1108, the automatic warehouse 30 moves the belt 33 toward the ejection port 31b by a predetermined amount of movement corresponding to the size of the supplied product. The predetermined amount of movement is the same amount of movement in the step 1105 described above.

In step 1109, the automatic warehouse 30 increments the number of times of movement of the belt 33. The number of times of movement of the belt 33 is the number of times at which the belt 33 is moved to the ejection port 31b by the predetermined amount of movement.

In step 1110, the automatic warehouse 30 determines whether the supply of the product is completed. After the completion of the supply of the product, the operator may notify the automatic warehouse 30 of the completion of the supply of the product by transmission from the operator terminal 70. Alternatively, the operator may notify the automatic warehouse 30 of the completion of the supply of the product by operating a predetermined operation panel. In addition, the automatic warehouse 30 may determine whether the supply of the product is completed, based on the time measurement of a timer. To be more specific, the automatic warehouse 30 may determine that the supply of the product is not completed until the timer measures a predetermined elapsed time, and determine that the supply of the product is completed after the timer measures the predetermined elapsed time. When determining that the supply of the product is not completed, the automatic warehouse 30 moves the step to the step 1107. On the other hand, when determining that the supply of the product is completed, the automatic warehouse 30 moves the step to step 1111.

In the step 1111, the automatic warehouse 30 acquires the number of products actually supplied, based on the number of times of movement of the belt 33. As the step 1108, the automatic warehouse 30 moves the belt 33 toward the ejection port 31b by the predetermined amount of movement every time the product is supplied. This predetermined amount of movement corresponds to the size of the supplied product in the front-to-back direction. Then, the automatic warehouse 30 increments the number of times of movement of the belt 33 every time the product is supplied as the step 1109. Therefore, the number of times of movement of the belt 33 after the supply of the product is completed corresponds to the number of the supplied products. For example, when the number of times of movement of the belt 33 is twice, the automatic warehouse 30 can determine that the number of the supplied products is two.

In step 1112, the automatic warehouse 30 calculates a target amount of movement of the belt 33 to the ejection port 31b, based on the number of the existing product in the storage position for the supply product and the acquired number of the supplied products. For the automatic warehouse 30, the upper limit of the number of the products that can be stored on one belt conveyor 32 constituting the shelf plate 31d of the shelf 31 is predetermined, which is equivalent to the distance between the supply port 31a and the ejection port 31b. In addition, the number of the existing product stored in the storage position for the supplied product is previously known based on the storage information.

Here, the sum of the number of the existing product in the storage position for the supplied product and the number of the supplied products acquired in the step 1111 is "N." The size of the supplied product in the front-to-back direction is "L." The distance between the supply port 31a and the ejection port 31b is "D." Then, target amount of movement "M" is calculated by using the following equation (1).

$$M = D - (L \times N) \ldots\ldots \text{ Equation (1)}$$

In step **1113,** the automatic warehouse 30 moves the belt 33 toward the ejection port 31b by the calculated target amount of movement. By this means, in the automatic warehouse 30, the front one of the products stored on one belt conveyor 32 constituting the shelf plate 31d of the shelf 31 is located at the ejection port 31b. The product located at the ejection port 31b is to be ejected from the shelf 31 for example, to the selling apparatus 20, and stands by for the ejection from the shelf 31. In other words, the automatic warehouse 30 can speedily convey the product to the selling apparatus 20 by positioning the front one of the products stored on the belt conveyor 32 at the ejection port 31b.

In step 1114, the automatic warehouse 30 creates storage information of the supplied product. Then, the automatic warehouse 30 ends the process.

<Embodiment 1: Product sales process of Unmanned store system>

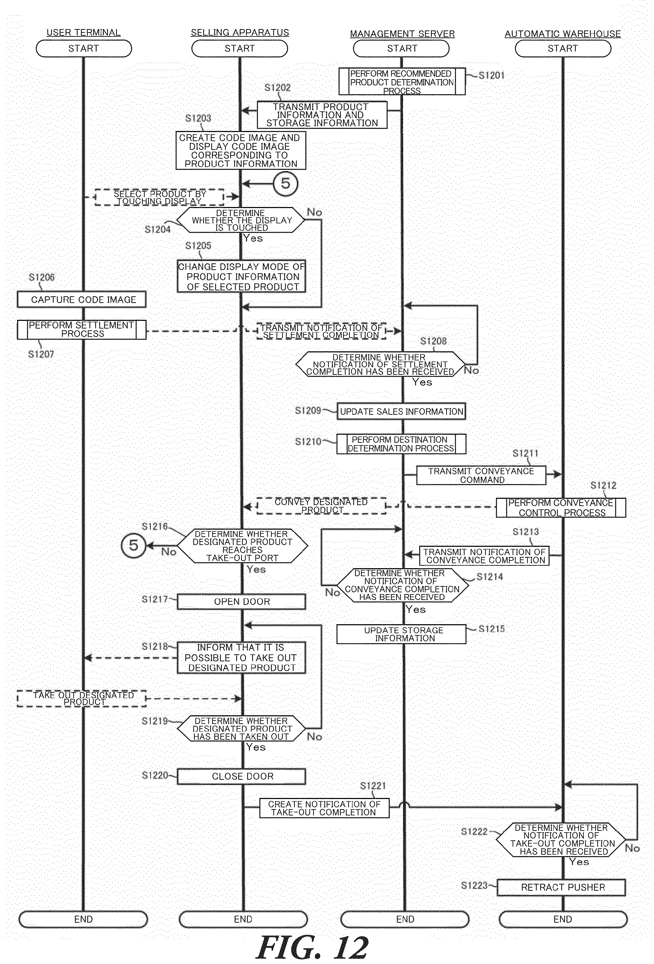

Fig. 12 is a flowchart illustrating a product sales process performed in the unmanned store system 1 according to Embodiment 1.

As described above, in the unmanned store system 1, the automatic warehouse 30 monitors the products stored in the shelves 31 and the conveyance devices 42, creates the storage information and the operating information, and transmits the created information to the management server 50. The management server 50 records the storage information and the operating information transmitted from the automatic warehouse 30, and manages the storage state of the products and the operating state of the conveyance devices 42, based on the information.

Then, in the unmanned store system 1, the selling apparatus 20 displays the product information and the code image G on the display 21 to sell a product to the user visiting the unmanned store 10. With the present embodiment, a process performed in the unmanned store system 1 to sell a product to the user may be referred to as "product sales process."

The user captures the code image G of the product displayed on the display 21 of the selling apparatus 20, and transmits a request for settlement included in the code image G, and therefore can designate the product to be purchased. With the present embodiment, the product designated by the user for purchase may be referred to as "designated product."

Here, the product sales process illustrated in fig. 12 merely describes a product sales process in a case where one product is sold, and the product sales process for any other product and a product supply process may be performed in parallel.

In step 1201, the management server 50 performs a recommended product determination process. The recommended product determination process will be described in detail later with reference to Fig. 13.

In step 1202, the management server 50 transmits the product information and the storage information of the product sold by the selling apparatus 20, to the selling apparatus 20. The product sold by the selling apparatus 20 may include the recommended product determined in the step 1201. Then, the management server 50 moves the step to step 1208.

Upon receiving the product information and the storage information transmitted from the management server 50, the selling apparatus 20 encodes the received product information, a request for settlement indicated by the product information, and the selling apparatus information, and generates the code image G in step 1203. Then, the selling apparatus 20 displays the created code image G and the product information, corresponding the code image G to the product information. The user checks the product information displayed on the selling apparatus 20, and can select the product by touching the display 21.

In step 1204, the selling apparatus 20 determines whether the display 21 is touched. When determining that the display 21 is not touched, the selling apparatus 20 moves the step to step 1216. On the other hand, when determining that the display 21 is touched, the selling apparatus 20 moves the step to step 1205.

In the step 1205, the selling apparatus 20 changes the display mode of the product information of the selected product and the code image G, and moves the step to the step 1216. For example, the selling apparatus 20 enlarges the display area for the selected product to show the product information in detail. Moreover, the selling apparatus 20 adjusts the display area for the code image G to make it easy for the user to capture the code image G, and highlights the code image G to emphasize the code image G.

In addition, when the selected product is offered to the user free as a promotion, for example, clothes, and cosmetics, the selling apparatus 20 can capture an image of the user by the camera 26, combine the captured image of the user with the image of the selected product, and display the composite image on the display 21. Moreover, the selling apparatus 20 can display the information related to the selected product, for example, an event or demonstration image together with the product information of the selected product on the display 21. Furthermore, the selling apparatus 20 can display an advertising image, a demonstration image, or the product information of the recommended product on the display 21 regardless of whether the product is selected by the user. In this case, the selling apparatus 20 may capture an image of the sales area 11 by the camera 26, analyze the captured image, and change the image displayed on the display 21 when the user approaches the selling apparatus 20. In this way, the selling apparatus 20 has an AR (augmented reality) function that allows virtual fitting and virtual make-up, and a signage function to make it possible to promote the sale of products.

In step 1206, the user terminal 80 captures the code image G displayed on the selling apparatus 20 by the operation of the user.

In step 1207, the user terminal 80 performs a settlement process with the settlement server 60, based on the captured code image G. After the settlement process, a notification of settlement completion is transmitted from the settlement server 60 to the management server 50. The settlement process will be described in detail later with reference to Fig. 14. Then, the user terminal 80 ends the process. The user waits until the designated product can be taken out of the take-out port 22 of the selling apparatus 20.

In step 1208, the management server 50 determines whether the notification of settlement completion transmitted from the settlement server 60 has been received. When determining that the notification of settlement completion has not been received, the management server 50 waits until the notification of settlement completion has been received. On the other hand, when determining that the notification of settlement completion has been received, the management server 50 moves the step to step 1209.

In the step 1209, the management server 50 updates the sales information of the designated product, after the notification of settlement completion has been received. The management server 50 checks the product information of the designated product included in the notification of settlement completion, and therefore can recognize that the payment for the designated product has been made. The management server 50 updates the sales information of the designated product based on that fact.

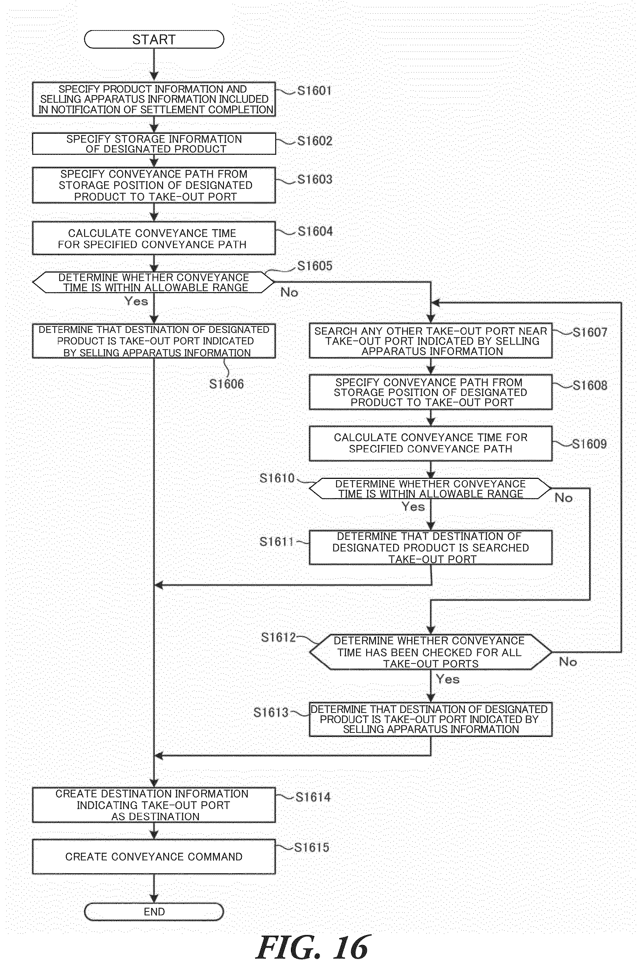

In step 1210, the management server 50 performs a destination determination process to determine the destination of the conveyance of the designated product, after the notification of settlement completion has been received. The destination of the conveyance is the ejection port 22 of the selling apparatus 20 to which the product is conveyed from the automatic warehouse 30. The destination determination process is performed to determine which of the ejection ports 22 of the plurality of the selling apparatuses 20 is the destination to which the product is conveyed. The management server 50 performs the destination determination process, and creates destination information indicating the ejection port 22 as the destination of the designated product. The destination determination process will be described in detail later with reference to Fig. 16.

After the destination determination process, the management server 50 transmits a conveyance command including the product information, the storage position, and the destination information of the designated product to the automatic warehouse 30 in step 1211. Then, the management server 50 moves the step to step 1214.

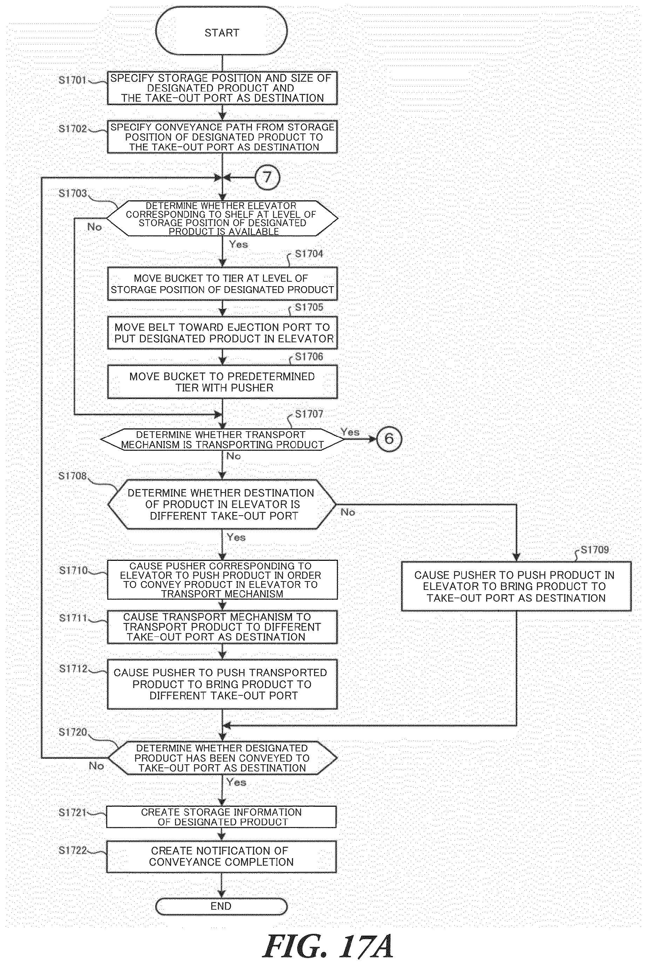

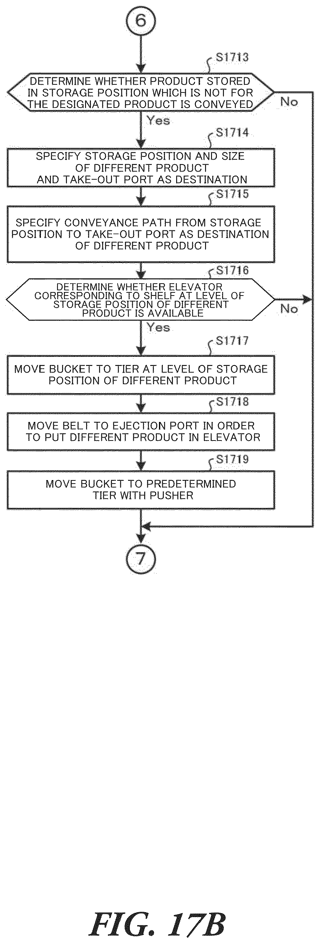

Upon receiving the conveyance command transmitted from the management server 50, the automatic warehouse 30 performs a conveyance control process in the step 1212. The conveyance control process is performed by the automatic warehouse 30 to convey the designated product stored in the shelf 31 to the take-out port 22 of the selling apparatus 20. The conveyance control process will be described in detail later with reference to Figs. 17A and 17B.

After the conveyance control process, the automatic warehouse 30 transmits a notification of conveyance completion including the storage information of the designated product to the management server 50 in step 1213. The notification of conveyance completion indicates that the designated product has been properly conveyed to the take-out port 22, and therefore the conveyance is completed. Then, the automatic warehouse 30 moves the step to step 1222.

In the step 1214, the management server 50 determines whether the notification of conveyance completion transmitted from the automatic warehouse 30 has been received. When determining that the notification of conveyance completion has not been received, the management server 50 waits until the notification of conveyance completion has been received. On the other hand, when determining that the notification of conveyance completion has been received, the management server 50 moves the step to step 1215.

In the step 1215, the management server 50 updates the recorded storage information, based on the storage information included in the received notification of conveyance completion, after the notification of conveyance completion has been received. Then, the management server 50 ends the process.

In the step 1216, the selling apparatus 20 determines whether the designated product conveyed from the automatic warehouse 30 reaches the take-out port 22, based on the detection result by the take-out port sensor 24. When determining that the designated product does not reach the take-out port 22, the selling apparatus 20 moves the step to the step 1204. On the other hand, when determining that the designated product reaches the take-out port 22, the selling apparatus 20 moves the step to step 1217.

In the step 1217, the selling apparatus 20 opens the door 23 of the take-out port 22 at which the designated product has arrived.

In step 1218, the selling apparatus 20 informs that it is possible to take the designated product out of the take-out port 22. The selling apparatus 20 can inform the user that it is possible to take the product out of the take-out port 22 by emitting a sound from the speaker 27, or displaying an image on the display 21. By this means, the user can take the designated product out of the take-out port 22.

In step 1219, the selling apparatus 20 determines whether the designated product has been taken out of the take-out port 22, based on the detection result by the take-out port sensor 24. When determining that the designated product has not been taken out of the take-out port 22, the selling apparatus 20 moves the step to the step 1218. On the other hand, when determining that the designated product has been taken out of the take-out port 22, the selling apparatus 20 moves the step to step 1220.

In the step 1220, the selling apparatus 20 closes the door 23 of the take-out port 22 from which the designated product has been taken.

In step 1221, the selling apparatus 20 creates a notification of take-out completion indicating that the designated product has been taken out of the take-out port 22, and transmits the notification to the automatic warehouse 30. Then, the selling apparatus 20 ends the process.

In step 1222, the automatic warehouse 30 determines whether the notification of take-out completion transmitted from the selling apparatus 20 has been received. When determining that the notification of take-out completion has not been received, the automatic warehouse 30 waits until the notification of take-out completion has been received. On the other hand, when determining that the notification of take-out completion has been received, the automatic warehouse 30 moves the step to step 1223.

In the step 1223, the automatic warehouse 30 retracts the pusher 38 corresponding to the take-out port 22 from which the designated product has been taken into the shelf 31. Even after the designated product reaches the take-out port 22, the pusher 38 remains extended to the take-out port 22 until the door 23 of the take-out port 22 is closed. By this means, even though the door 23 is open, the tray 25 of the take-out port 22 is shielded by the pusher 28, and therefore it is possible to prevent any suspicious substance from entering the automatic warehouse 30 from the take-out port 22. After the designated product is taken out of the take-out port 22 and the door 23 is closed, the pusher 38 is retracted into a predetermined tier of the shelf 31. Then, the automatic warehouse 30 ends the process.

Fig. 13 is a flowchart illustrating the recommended product determination process according to Embodiment 1.

In step 1301, the management server 50 checks the product information and the storage information of the product stored in the automatic warehouse 30.

In step 1302, the management server 50 specifies the top three items with high priority among the items of each of the product information and the storage information. As illustrated in Fig. 9A, the management server 50 specifies the sales period, the expiration date, and the price as the top three items of the product information with high priority. The management server 50 specifies the inventory quantity, the sales state and the storage period as the top three items of the storage information with high priority.

In step 1303, the management server 50 evaluates the products stored in the automatic warehouse 30 for the specified top three items, and gives evaluated values. For example, for the top three items of the product information with high priority, the management server 50 may give a high evaluated value to the product having an upcoming end of the sales period, an upcoming expiration date, and a high price. Meanwhile, for example, for the top three items of the storage information with high priority, the management server 50 may give a high evaluated value to the product having a large inventory quantity, being available for sale, and having an ejection date within the storage period in the past.

In step 1304, the management server 50 specifies the top ten kinds of products with high evaluated values as a recommended product candidate group.

In step 1305, the management server 50 checks the operating information of the conveyance devices 42.

In step 1306, the management server 50 specifies the top three items of the operating information with high priority. As illustrated in Fig. 9B, the management server 50 specifies the operating frequency, the operating state, and the maintenance time as the top three items of the operating information with high priority.

In step 1307, the management server 50 evaluates the product of the recommended product candidate group for the specified top three items, and gives an evaluated value to the product. For example, the management server 50 focuses attention on the belt conveyor 32 as the conveyance device 42, and may give a high evaluated value to the product stored on the belt conveyor 32 which has a low operating frequency, is being operated, and has an upcoming maintenance time. In addition, for example, the management server 50 focuses attention on the elevator 35 as the conveyance device 42, and may give a high evaluated value to the product stored in the shelf 31 corresponding to the elevator 35 which has a low operating frequency, is being operated, and has an upcoming maintenance time.

In step **1308,** the management server 50 determines the product with the highest evaluated value as the recommended product.

In step 1309, the management server 50 checks the product information of the determined recommended product, and specifies the current price of the determined recommended product.

In step 1310, the management server 50 changes the price of the recommended product, based on the operating frequency which is one of the top items of the operating information. For example, the management server 50 changes the price of the recommended product to a new price with a 30 percent discount. Here, the price of the recommended product may be increased to a premium price when the recommend product is offered as a premium product.

In step 1311, the management server 50 updates the product information of the recommended product to reflect the changed price, and ends the process. After that, the management server 50 transmits the product information of the recommended product at the changed price to the selling apparatus 20. The selling apparatus 20 displays the product information and the code image G with the changed price of the recommended product. In this way, the unmanned store system 1 advertises the product based on the storage state of the products or the operating state of the conveyance devices 42, and therefore can efficiently sell the products stored in the automatic warehouse 30.

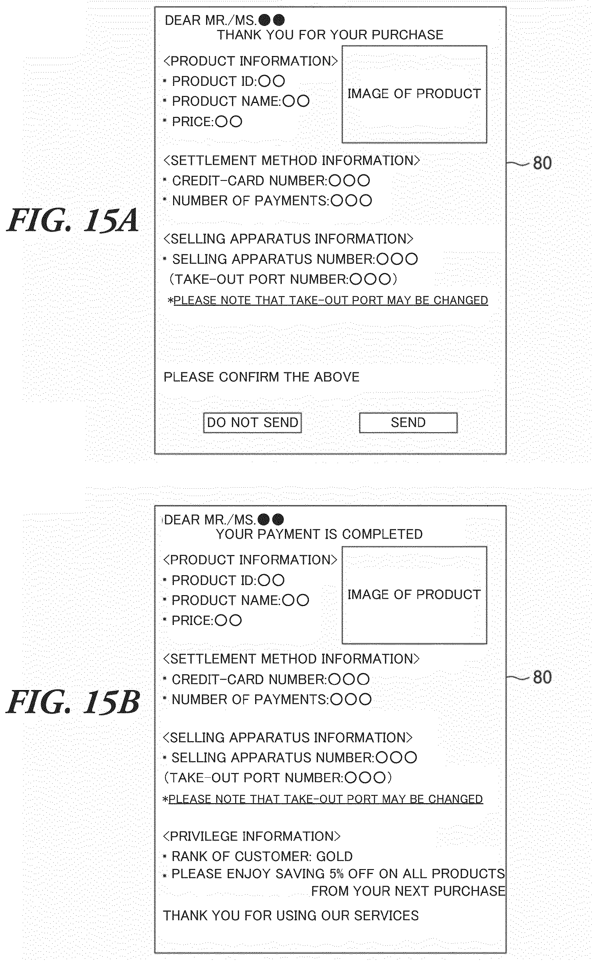

Fig. 14 is a flowchart illustrating the settlement process according to Embodiment 1. Fig. 15A schematically illustrates the screen of the user terminal 80 before a request for settlement is transmitted to the settlement server 60 in the settlement process according to Embodiment 1. Fig. 15B schematically illustrates the screen of the user terminal 80 when the user terminal 80 receives the notification of settlement completion in the settlement process according of Embodiment 1.

In step 1401, the user terminal 80 specifies the captured code image G.

In step 1402, the user terminal 80 decodes the specified code image G and extracts the product information of the designated product, the selling apparatus information, and the request for settlement.

In step 1403, the user terminal 80 displays the product information of the designated product and the request for settlement which have been extracted. As illustrated in Fig. 15A, the user terminal 80 may display the product ID, the name, the image, and the price as the product information of the designated product. In addition, the user terminal 80 may display settlement method information such as a credit-card number inputted by the user, and a check button to check if the transmission to the settlement server 60 is possible, as the request for settlement.

Moreover, the user terminal 80 can display the selling apparatus information of the selling apparatus 20 on which the code image G of the designated product is displayed. This selling apparatus information indicates the take-out port 22 of the selling apparatus 20 on which the code image G of the designated product is displayed. That is, the take-out port 22 indicated by selling apparatus information belongs to the selling apparatus 20 displaying the code image G of the designated product. The take-out port 22 indicated by the selling apparatus information belongs to the selling apparatus 20 used by the user to purchase the product, and may be the default destination of the designated product.

In step 1404, the user terminal 80 transmits a request for settlement including the user information, the product information of the designated product, and the selling apparatus information to the settlement server 60. The user information may be identification information of the user having the user terminal 80, and be the terminal ID of the user terminal 80. After that, the user terminal 80 waits until the notification of settlement completion transmitted from the settlement server 60 have been received.

Upon receiving the request for settlement transmitted from the user terminal 80, the settlement server 60 makes settlement of the designated product in response to the received request for settlement in step 1405. To be more specific, the settlement server 60 performs a process to make payment for the designated product.

In step 1406, the settlement server 60 creates a notification of settlement completion including the product information of the designated product and the selling apparatus information, and transmits the notification to the management server 50. In this case, the settlement server 60 does not transmit the user information and the settlement method information equivalent to the personal information of the user, to the management server 50. Therefore, the user can purchase the product although not providing the unmanned store 10 with the personal information.

Here, the settlement server 60 may specify the customer type of the user based on the user information, and create the customer type information indicating the specified customer type. Then, the settlement server 60 may transmit the notification of settlement completion including the created customer type information to the management server 50. The management server 50 can update the recorded customer type as an item of the sales information of the designated product, and therefore accumulate more detailed sales information.

In step 1407, the settlement server 60 specifies the settlement history of the user, based on the user information.

In step 1408, the settlement server 60 determines a privilege given to the user based on the settlement history. This privilege may be, for example, a discount of the product, point return by corporations, and the sale of a special product.

In step 1409, the settlement server 60 creates privilege information indicating that the determined privilege is given to the user.

In step 1410, the settlement server 60 creates a notification of settlement completion including the privilege information, and transmits the notification to the user terminal 80. Then, the settlement server 60 ends the process.

Upon receiving the notification of settlement completion transmitted from the settlement server 60, the user terminal 80 displays the received notification of settlement completion in step 1411. As illustrated in Fig. 15B, the user terminal 80 can display the notification of settlement completion and the privilege information, in addition to the product information of the designated product, the settlement method information and the selling apparatus information as illustrated in Fig. 15A. Then, the user terminal 80 ends the process.

Here, the privilege information illustrated in Fig. 15B indicates that the user having the user terminal 80 is given a privilege that allows the user to purchase the product at a price by discounting 5 percent from the price displayed on the display 21 of the selling apparatus 20. This discount rate may be changed according to the rank of the customer to increase the discount rate when the rank of the customer is up.

Fig. 16 is a flowchart illustrating the destination determination process according to Embodiment 1.

Upon receiving the notification of settlement completion transmitted from the settlement server 60, the management server 50 specifies the product information of the designated product and the selling apparatus information included in the received notification of settlement completion in step 1601.

In step 1602, the management server 50 checks the product information of the designated product to specify the storage information of the designated product.

In step 1603, the management server 50 checks the storage information of the designated product and the selling apparatus information to specify the conveyance path from the storage position of the designated product to the take-out port 22 indicated by the selling apparatus information. The take-out port 22 indicated by the selling apparatus information may be the default destination of the designated product. That is, the management server 50 specifies the default conveyance path of the designated product in the step 1603.

In step 1604, the management server 50 calculates the conveyance time for the specified conveyance path, based on the operating information of the conveyance devices 42. The conveyance time is a period of time required to convey the designated product to the take-out port 22 through the specified conveyance path. The management server 50 checks the operating information of the conveyance devices 42. Then, the management server 50 calculates the conveyance time for the specified conveyance path by using the installation position, the operating state, and the operating time of each of the belt conveyor 32, the elevator 35, the pusher 38 and the transport mechanism 41 provided to correspond to the storage position of the designated product.

In step 1605, the management server 50 determines whether the calculated conveyance time is within the allowable range. The allowable range is predetermined based on, for example, the performance of the conveyance devices 42, the scale of the number of products to be sold, and the waiting limit time for the user. When determining that the conveyance time is out of the allowable range, the management server 50 moves the step to step 1607. On the other hand, when determining that the conveyance time is within the allowable time, the management server 50 moves the step to step 1606.

In the step 1606, the management server 50 determines that the destination of the designated product is the take-out port 22 indicated by the selling apparatus information. That is, when the conveyance time is within the allowable range, the management server 50 determines that the destination of the designated product is take-out port 22 which is the default destination. Then, the management server 50 moves the step to step 1614.

In the step **1607,** the management server 50 searches any other take-out port 22 near the take-out port 22 indicated by the selling apparatus information.

In step 1608, the management server 50 specifies the conveyance path from the storage position of the designated product to the searched take-out port 22.

In step 1609, the management server 50 calculates the conveyance time for the specified conveyance path, based on the operating information of the conveyance devices 42.

In step 1610, the management server 50 determines whether the calculated conveyance time is within the allowable range. When determining that the conveyance time is out of the allowable range, the management server 50 moves the step to step 1612. On the other hand, when determining that the conveyance time is within the allowable range, the management server 50 moves the step to step 1611.

In the step 1611, the management server 50 determines that the destination of the designated product is the searched take-out port 22. Then, the management server 50 moves the step to the step 1614.

In the step 1612, the management server 50 determines whether the conveyance time has been checked for all the take-out ports 22. When determining that the conveyance time has not been checked for all the take-out ports 22, the management server 50 moves the step to the step 1607. After moving the step to the step 1607, the management server 50 searches the take-out ports 22 in order from the one nearest to the take-out port 22 indicated by the selling apparatus information to the farthest one. On the other hand, when determining that the conveyance time has been checked for all the take-out ports 22, the management server 50 moves the step to step 1613.

In the step 1613, the management server 50 determines that the destination of the designated product is the take-out port 22 indicated by the selling apparatus information. That is, the conveyance time is out of the allowable range for all the take-out ports 22, the management server 50 determines that the destination of the designated product is the take-out port 22 which is the default destination. Then, the management server 50 moves the step to step 1614.

In the step 1614, the management server 50 creates destination information indicating the determined take-out port 22 as the destination of the designated product.

In step 1615, the management server 50 creates a conveyance command including the product information, the storage position, and the destination information of the designated product. Then, the management server 50 ends the process.

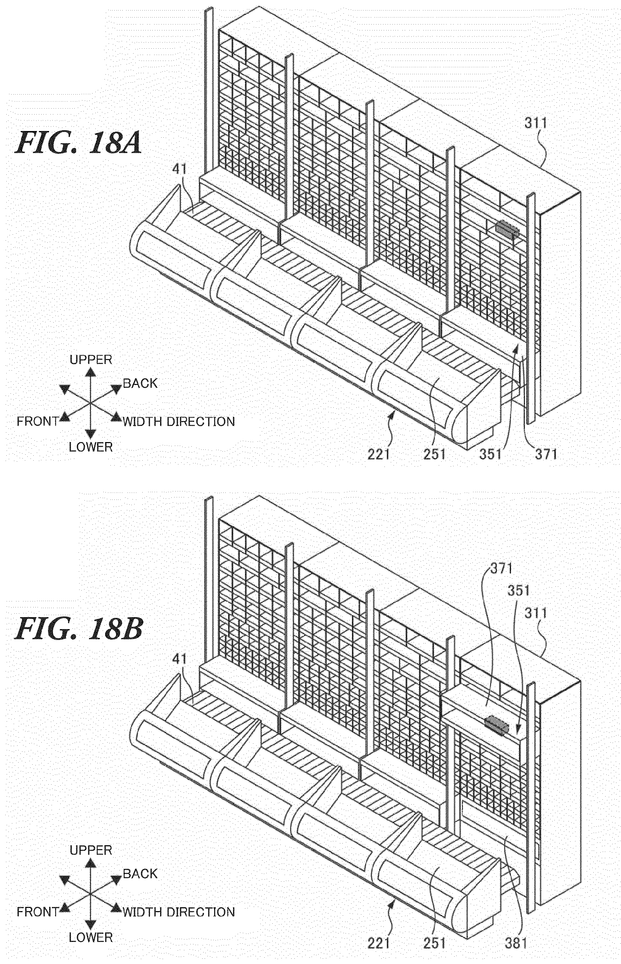

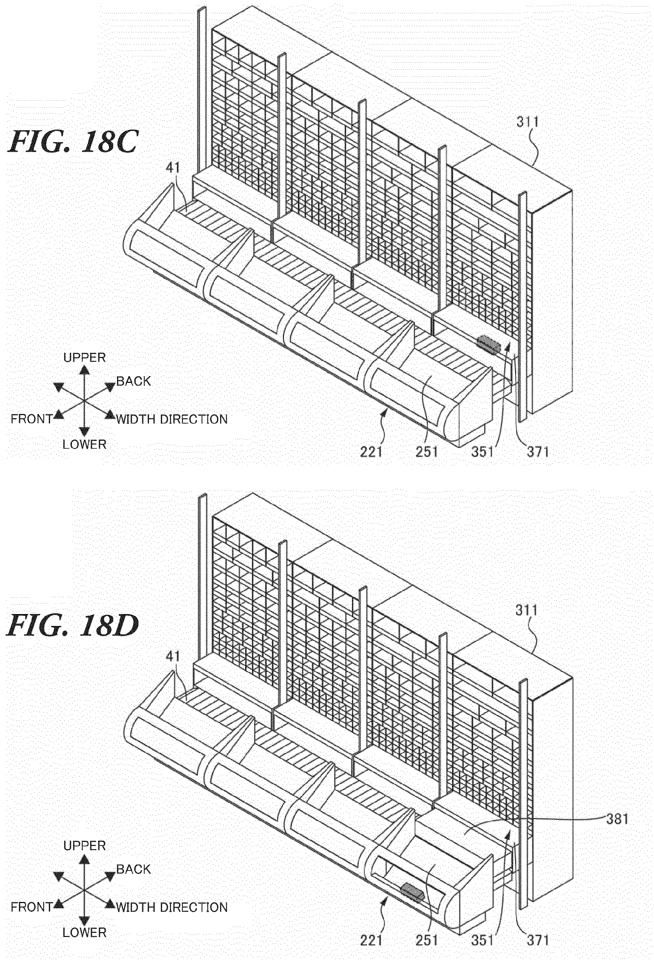

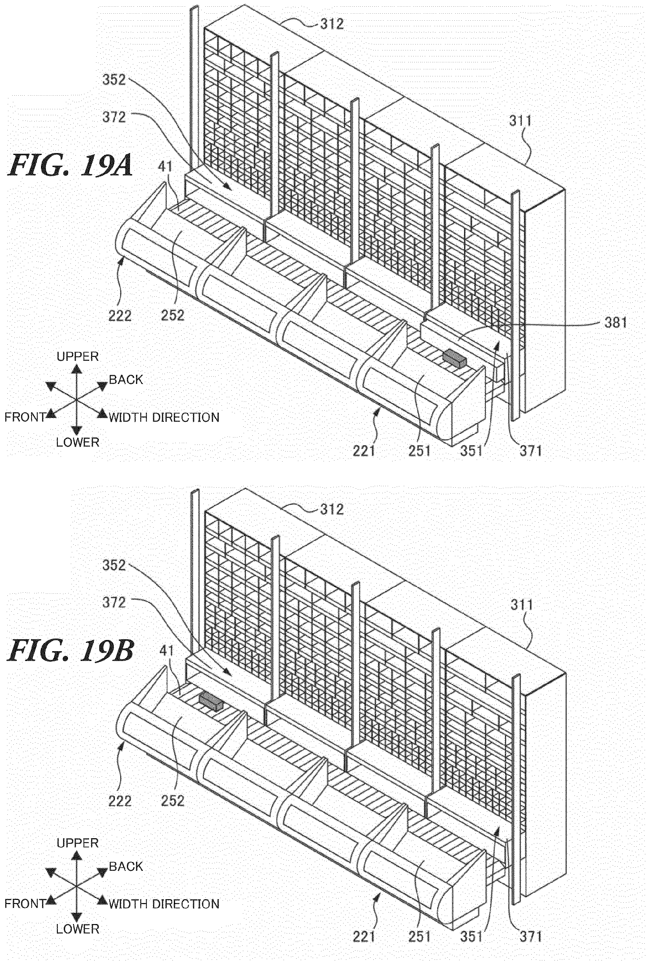

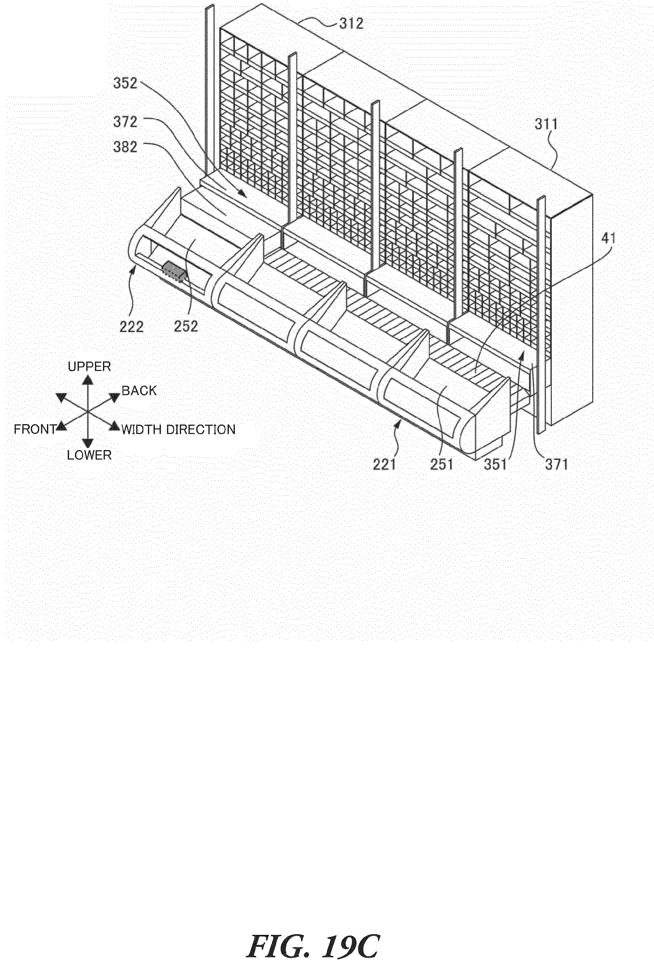

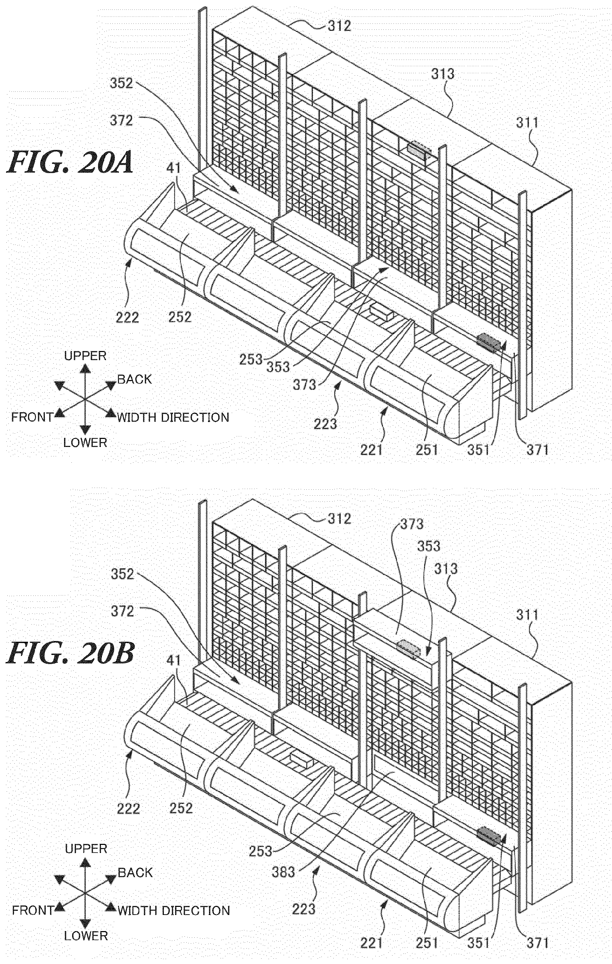

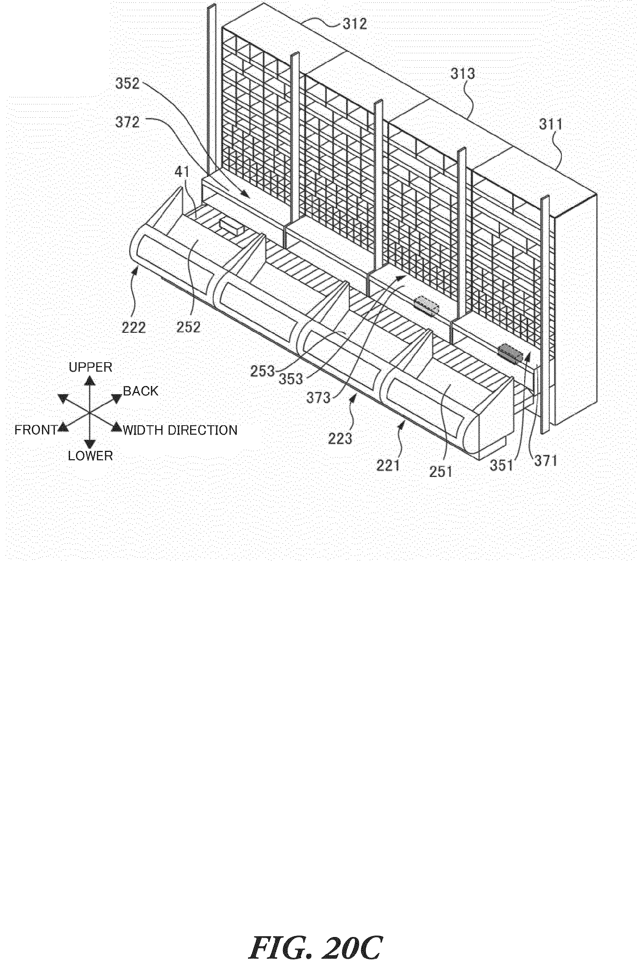

Fig. 17A is a flowchart illustrating the conveyance control process according to Embodiment 1. Fig. 17B is a flowchart illustrating the conveyance control process continuing from Fig. 17A. Fig. 18A illustrates an exemplary operation of the automatic warehouse 30 in the conveyance control process according to Embodiment 1. Fig. 18B illustrates the state of the automatic warehouse 30 after the state illustrated in Fig. 18A. Fig. 18C illustrates the state of the automatic warehouse 30 after the state illustrated in Fig. 18B. Fig. 18D illustrates the state of the automatic warehouse 30 after the state illustrated in Fig. 18C. Fig. 19A illustrates an exemplary operation of the automatic warehouse 30 in the conveyance control process according to Embodiment 1. Fig. 19B illustrates the state of the automatic warehouse 30 after the state illustrated in Fig. 19A. Fig. 19C illustrates the state of the automatic warehouse 30 after the state illustrated in Fig. 19B. Fig. 20A illustrates an exemplary operation of the automatic warehouse 30 in the conveyance control process according to Embodiment 1. Fig. 20B illustrates the state of the automatic warehouse 30 after the state illustrated in Fig. 20A. Fig. 20C illustrates the state of the automatic warehouse 30 after the state illustrated in Fig. 20B.

In Figs. 18A to 20C, the box in dark gray schematically illustrates the designated product, and the box in light gray and the box in white schematically illustrate products different from the designated product.

Upon receiving the conveyance command transmitted from the management server 50, the automatic warehouse 30 checks the product information, the storage position and the destination information included in the received conveyance command in step **1701.** Then, the automatic warehouse 30 specifies the storage position of the designated product, the size of the designated product in the front-to-back direction, and the take-out port 22 as the destination.

In step 1702, the automatic warehouse 30 specifies the conveyance path from the storage position of the designated product to the take-out port 22 as the destination.

In step 1703, the automatic warehouse 30 determines whether the elevator 35 corresponding to the shelf 31 having the storage position of the designated product is available. When determining that the elevator 35 is not available, the automatic warehouse 30 moves the step to step 1707. On the other hand, when determining that the elevator 35 is available, the automatic warehouse 30 moves the step to step 1704.

Here, when the elevator 35 is not available, the bucket 37 of the elevator 35 is located at the predetermined tier of the shelf 31 in which the pusher 38 is provided, and stands by for carrying the accommodated product out of the elevator 35.

In the step 1704, the automatic warehouse 30 moves the bucket 37 of the elevator 35 to the tier of the shelf 31 at the level of the storage position of the designated product.

As illustrated in Fig. 18A, the storage position of the designated product is in the third tier from the top in a first shelf 311 of the plurality of shelves 31. In this case, a first bucket 371 of a first elevator 351 of the plurality of elevator 35, which corresponds to the first shelf 311, is moved to the third tier from the top of the first shelf 311 as illustrated in Fig. 18B.

In step 1705, the automatic warehouse 30 moves the belt conveyer 32 at the storage position for the designated product to move the belt 33 toward the ejection port 31b, so as to put the designated product in the elevator 35.

As illustrated in Fig. 18B, the designated product is conveyed forward and ejected from the first shelf 311, and put in the first bucket 371 of the first elevator 351.

In step 1706, the automatic warehouse 30 moves the bucket 37 of the elevator 35 to the predetermined tier of the shelf 31 in which the pusher 38 is provided.

As illustrated in Fig. 18C, when a first pusher 381 of the plurality of pushers 38 is provided in the second tier from the bottom in the first shelf 311, the first bucket 371 of the first elevator 351 is moved to the second tier from the bottom in the first shelf 311.

In step 1701, the automatic warehouse 30 determines whether the transport mechanism 41 is transporting the product. When determining that the transport mechanism 41 is transporting the product, the automatic warehouse 30 moves the step to step 1713. On the other hand, when determining that the transport mechanism 41 is not transporting the product, the automatic warehouse 30 moves the step to step **1708.**

In the step 1708, the automatic warehouse 30 determines whether the destination of the product accommodated in the elevator 35 is the take-out port 22 different from the take-out port 22 corresponding to the elevator 35. When determining that the destination of the product accommodated in the elevator 35 is the take-out port 22 different from the take-out port 22 corresponding the elevator 35, the automatic warehouse 30 moves the step to step 1710. On the other hand, when determining that the destination of the product accommodated in the elevator 35 is the take-out port 22 corresponding to the elevator 35, the automatic warehouse 30 moves the step to step 1709.

In the step 1709, the automatic warehouse 30 causes the corresponding pusher 38 to push the product accommodated in the elevator 35 forward to bring the product to the take-out port 22 as the destination of the product, which corresponds to the elevator 35. Then, the automatic warehouse 30 moves the step to step 1720.

As illustrated in Fig. 18D, the product accommodated in the first elevator 351 is pushed forward by the first pusher 381 corresponding to the first elevator 351 to bring the product to a first take-out port 221 of the plurality of take-out ports 22, which corresponds to the first pusher 381. The product pushed out of the first elevator 351 is carried to the first take-out port 221 and reaches a first tray 251 of the first take-out port 221.

In step 1710, in order to convey the product accommodated in the elevator 35 to the transport mechanism 41, the automatic warehouse 30 causes the pusher 38 corresponding to this elevator 35 to push the product forward.

As illustrated in Fig. 19A, the product accommodated in the first elevator 351 is pushed forward to the first take-out port 221 by the first pusher 381. The product pushed out of the first elevator 351 to the transport mechanism 41, and put on the transport mechanism 41.

In step 1711, the automatic warehouse 30 causes the transport mechanism 41 to transport the product carried out of the elevator 35 to the take-out port 22 as the destination of this product, which is different from the take-out port 22 corresponding to the elevator 35.

As illustrated in Fig. 19B, the product carried out of the first elevator 351 is transported to the second take-out port 222 of the plurality of take-out ports 22 as the destination of this product, which is different from the first take-out port 221.

In step 1712, the automatic warehouse 30 causes the pusher 38 corresponding to the different take-out port 22 to push the transported product forward to bring the product to the different take-out port 22. Then, the automatic warehouse 30 moves the step to step 1720.

As illustrated in Fig. 19C, the product transported by the transport mechanism 41 is pushed forward to the second take-out port 222 by a second pusher 382 of the plurality of pushers 38, which corresponds to the second take-out port 222. The pushed product is conveyed from the transport mechanism 41 to the second take-out port 222, and reaches a second tray 252 of the second take-out port 222.

Here, Fig. 19C illustrates a case where a second bucket 372 of a second elevator 352 is located at the predetermined tier in which the second pusher 382 is provided when the product transported by the transport mechanism 41 is pushed by the second pusher 382. However, this is by no means limiting, and when the product transported by the transport mechanism 41 is pushed by the second pusher 382, the second bucket 372 may be moved to any other tier of the second shelf 312 to convey a different product.

In the step 1713, the automatic warehouse 30 determines whether a different product stored in the storage position which is not for the designated product is conveyed. The automatic warehouse 30 may determine whether the different product is conveyed by determining whether the conveyance command to convey the different product transmitted from the management server 50 has been received. When determining that the different product is not conveyed, the automatic warehouse 30 moves the step to the step 1703. On the other hand, when determining that the different product is conveyed, the automatic warehouse 30 moves the step to step 1714.

In the step 1714, the automatic warehouse 30 checks the product information, the storage position, and the destination information included in the received conveyance command, and specifies the storage position of the different product, the size of the different product in the front-to-back direction, and the take-out port 22 as the destination.

In step 1715, the automatic warehouse 30 specifies the conveyance path from the storage position of the different product to the take-out port 22 as the destination of the different product.

In step 1716, the automatic warehouse 30 determines whether the elevator 35 corresponding to the shelf 31 having the storage position of the different product is available. When determining that the elevator 35 is not available, the automatic warehouse 30 moves the step to the step 1703. On the other hand, when determining that the elevator 35 is available, the automatic warehouse 30 moves the step to step **1717.**

In the step 1717, the automatic warehouse 30 moves the bucket 37 of the elevator 35 to the tier of the shelf 31 at the level of the storage position of the different product.

As illustrated in Fig. 20A, the different product is not stored in the first shelf 311 but is stored in a third shelf 313 of the plurality of shelves 31 at the first tier from the top. In this case, a third bucket 373 of a third elevator 353 of the plurality of elevators 35 corresponding to the third shelf 313 is moved to the first tier of the third shelf 313 from the top.

In step 1718, the automatic warehouse 30 moves the belt conveyor 32 at the storage position for the different product to move the belt 33 to the ejection port 31b, in order to put the different product in the elevator 35.

As illustrated in Fig. 20B, the different product is conveyed forward and ejected from the third shelf 313, and then put in the third bucket 373 of the third elevator 353.

In step 1719, the automatic warehouse 30 moves the bucket 37 of the elevator 35 to the predetermined tier of the shelf 31 in which the pusher 38 is provided. Then, the automatic warehouse 30 moves the step to the step 1703.

As illustrated in Fig. 20C, when the third pusher 383 of the plurality of pushers 38 is provided in the second tier of the third shelf 313 from the bottom, the third bucket 373 of the third elevator 353 is moved to that second tier of the third shelf 313. Then, the bucket 373 of the third elevator 353 waits to carry the different product in the third elevator 353 out of the third elevator 353. In other words, the third pusher 383 waits to push the different product in the third elevator 353 to a third take-out port 223 of the plurality of take-out ports 22, which corresponds to the third pusher 383. Then, when the transport mechanism 41 is not transporting the product, the different product in the third elevator 353 is pushed to the third take-out port 223 by the third pusher 383.

In step 1720, the automatic warehouse 30 determines whether the designated product has been conveyed to the take-out port 22 as the destination. When determining that the designated product has not been conveyed to the take-out port 22 as the destination, the automatic warehouse 30 moves the step to the step 1703. On the other hand, when determining that the designated product has been conveyed to the take-out port 22 as the destination, the automatic warehouse 30 moves the step to step 1721.

In the step 1721, the automatic warehouse 30 creates storage information of the designated product. When a product different from the designated product has been conveyed to the take-out port 22 as the destination, the automatic warehouse 30 creates storage information of the different product.

In step 1722, the automatic warehouse 30 creates a notification of conveyance completion including the storage information of the designated product. When the product different from the designated product has been conveyed to the take-out port 22 as the destination, the automatic warehouse 30 creates a notification of the conveyance completion including the storage information of the different product. Then, the automatic warehouse 30 ends the process.

In this way, when the designated product cannot be put in the elevator 35 or when the transport mechanism 41 is transporting the product, the automatic warehouse 41 can convey the product different from the designated product, and therefore effectively convey products.

<Embodiment 1: Operation and Effect>

As described above, in the unmanned store system 1 according to Embodiment 1, the unmanned store 10 includes the sales area 11 in which the selling apparatuses 20 configured to sell products are installed, the automatic warehouse 30 separated from the sales area 11 by the partition wall 12 and configured to store the products, and the management server 50 configured to manage the products. Each of the selling apparatuses 20 displays the product information and the code images G, corresponding to the product information to the code image G. When the settlement is made in response to the request for settlement included in the core image G, the management server 50 transmits a conveyance command to the automatic warehouse 30. The automatic warehouse 30 conveys the product to the selling apparatus 20 based on the conveyance command.

Therefore, the unmanned store system 1 according to Embodiment 1 allows the user visiting the unmanned store 10 to purchase the product right there, not allowing the user to enter the automatic warehouse 30. In addition, the unmanned store system 1 according to Embodiment 1 can supply products to the automatic warehouse 30 and do maintenance of the automatic warehouse 30 without hindering the user visiting the unmanned store 10 from purchasing the product. By this means, the unmanned store system 1 according to Embodiment 1 can quickly provide the user with the product while preventing the products stored in the automatic warehouse 30 from being stolen or preventing any suspicious object from entering the automatic warehouse 30.

Moreover, in the unmanned store system 1 according to Embodiment 1, the settlement server 60 independent of the management body of the unmanned store 10 and the management server 50 performs the settlement process with the user terminal 80 to make settlement of the product. By this means, the unmanned store system 1 according to Embodiment 1 can make settlement of the product without the mediation of the unmanned store 10 and the management server 50, and therefore the user can purchase the product without presenting the personal information of the user to the unmanned store 10.

Therefore, the unmanned store system 1 according to Embodiment 1 can facilitate business transactions with high security between the unmanned store 10 and the user.

Moreover, in the unmanned store system 1 according to Embodiment 1, the management server 50 can determine the recommended product for the user based on the storage information transmitted from the automatic warehouse 30, and the selling apparatus 20 can sell the recommended product determined by the management server 50. By this means, the unmanned store system 1 according to Embodiment 1 can advertise the products based on the storage state of the products stored in the automatic warehouse 30, and therefore can efficiently sell the products stored in the automatic warehouse 30. Accordingly, the unmanned store system 1 according to Embodiment 1 can facilitate business transactions with high security between the unmanned store 10 and the user.

Moreover, in the unmanned store system 1 according to Embodiment 1, the management server 50 can determine the recommended product for the user based on the operating state transmitted from the automatic warehouse 30, and the selling apparatus 20 can sell the recommended product determined by the management server 50. Therefore, the unmanned store system 1 according to Embodiment 1 can advertise the products based on the operating state of the conveyance devices 42 of the automatic warehouse 30, and therefore can efficiently sell the products stored in the automatic warehouse 30.

Therefore, the unmanned store system 1 according to Embodiment 1 can facilitate business transactions with high security between the unmanned store 10 and the user.

In particular, the unmanned store system 1 according to Embodiment 1 can change the price of the recommended product, based on the operating frequencies of the conveyance devices 42 of the automatic warehouse 30, and therefore can more efficiently sell the products. Accordingly, the unmanned store system 1 according to Embodiment 1 can facilitate business transactions with high security between the unmanned store 10 and the user.

Moreover, in the unmanned store 10 according to Embodiment 1, the automatic warehouse 30 includes the shelves 31 each of which has the plurality of belt conveyors 32 constituting the shelf plates 31d provided in tiers, the elevators 35 each of which moves up and down for the plurality of belt conveyors 32, and the carrying-out mechanisms configured to carry the product out of the elevator 35. Therefore, the unmanned store 10 according to Embodiment 1 can realize the automatic warehouse 30 with a simple configuration which does not allow the user visiting the unmanned store 10 to enter the automatic warehouse 30. By this means, the unmanned store 10 according to Embodiment 1 can realize the automatic warehouse 30 with a simple configuration which can prevent the stored products from being stolen or prevent any suspicious object from entering the automatic warehouse 30. Therefore, the unmanned store 10 according to Embodiment 1 with a simple configuration can facilitate business transactions with high security between the unmanned store 10 and the user.

Moreover, in the unmanned store 10 according to Embodiment 1, the carrying-out mechanism of the automatic warehouse 30 is provided in the predetermined tier of each of the plurality of shelves 31. The carrying-out mechanism may be the pusher 38 configured to push the product accommodated in the elevator 35 to the take-out port 22 of the selling apparatus 20. Therefore, in the unmanned store 10 according to Embodiment 1, the carrying-out mechanism provided in the elevator 35 to carry the product out of the elevator 35 can be realized without a complex mechanism such as a manipulator and a robot arm, and can be retracted into the shelf 31, and consequently it is possible to save space. Therefore, the unmanned store 10 according to Embodiment 1 can facilitate business transactions with high security between the unmanned store 10 and the user with a simple configuration.

Moreover, in the unmanned store 10 according to Embodiment 1, the take-out port 22 of each of the plurality of selling apparatuses 20 is located in a direction to face the product pushed by the pusher 38. Therefore, in the unmanned store 10 according to Embodiment 1, the action of the pusher 38 to push the product allows the product to be ejected from the elevator 35 and to reach the take-out port 22. Therefore, the unmanned store 10 according to Embodiment 1 can facilitate business transactions with high security between the unmanned store 10 and the user with a simple configuration.

Furthermore, the unmanned store 10 according to Embodiment 1 includes the transport mechanism 41 provided between the elevator 35 and the take-out port 22, and configured to transport the product along the width direction of the shelves 31. Then, the unmanned store 10 according to Embodiment 1 can transport the product stored in the shelf 31 to the take-out port 22 different from the take-out port 22 corresponding to this shelf 31, and bring the product to the different take-out port 22. By this means, the unmanned store 10 according to Embodiment 1 allows the plurality of selling apparatuses 20 to sell products independently of each other, while allowing the automatic warehouse 30 to be shared by the plurality of selling apparatuses 20. By this means, the unmanned store 10 according to Embodiment 1 can sell various kinds of products in different sizes stored in different preservation environments all together in a compact space. Therefore, the unmanned store 10 according to Embodiment 1 can facilitate business transactions with high security between the unmanned store 10 and the user with a simple configuration.

Moreover, when a product to be conveyed to the selling apparatus 20 cannot be put in the elevator 35, or when the transport mechanism 41 is transporting a product, the unmanned store 10 according to Embodiment 1 can convey the different product at the same time. Therefore, the unmanned store 10 according to Embodiment 1 can shorten the conveyance time of the products stored in the automatic warehouse 30 as a whole. Therefore, the unmanned store 10 according to Embodiment 1 can facilitate business transactions with high security between the unmanned store 10 and the user with a simple configuration.

Furthermore, in the unmanned store 10 according to Embodiment 1, even after the designated product reaches the take-out port 22, the pusher 38 remains extended until the door 23 of the take-out port 22 is closed. By this means, the tray 25 of the take-out port 22 is shielded by the pusher 38 even though the door 23 is open, and consequently the unmanned store 10 according to Embodiment 1 can prevent any suspicious object from entering the automatic warehouse 30 from the take-out port 22. Therefore, the unmanned store 10 according to Embodiment 1 can facilitate business transactions with a simple configuration and improve the safety.

Furthermore, in the unmanned store 10 according to Embodiment 1, the belt conveyor 32 constitutes the shelf plate 31d of the shelf 31, and the supply port 31a and the ejection port 31b of the shelf 31 for the product is provided at the ends of the belt conveyor 32. By this means, the unmanned store 10 according to Embodiment 1 can speedily supply the shelf 31 with the product by the conveyance operation of the belt conveyor 32. In addition, the product is supplied from the supply port 31a in the back part of the shelf 31 and ejected from the ejection port 31b in the front part of the shelf 31, and therefore the unmanned store 10 according to Embodiment 1 allows FIFO (first-in first-out) of the products. Therefore, for example, the unmanned store 10 according to Embodiment 1 can reduce the possibility of selling an expired product, and simplify means for counting the number of the products actually stored in the shelves 31. Therefore, the unmanned store 10 according to Embodiment 1 can facilitate business transactions with high security between the unmanned store 10 and the user with a simple configuration.

Furthermore, when the supply port sensor 34 detects the product being located at the supply port 31a, the unmanned store 10 according to Embodiment 1 moves the belt 33 of the belt conveyor 32 to the ejection port 31b by a predetermined amount of movement corresponding to the size of the product. Therefore, the unmanned store 10 according to Embodiment 1 can successively move the belt 33 every time the product is supplied, and make a space near the supply port 31a to put the subsequent product on the belt 33. By this means, the unmanned store 10 according to Embodiment 1 accurately put the supplied product on the belt 33. As a result, the unmanned store 10 can supply the shelves 31 having a limited space with more number of products and store the products, and therefore can sell various kinds of products all together in a compact space. Therefore, the unmanned store 10 according to Embodiment 1 can facilitate business transactions with high security between the unmanned store 10 and the user with a simple configuration.

Furthermore, in the unmanned store 10 according to Embodiment 1, in order to support the products thereon, the belt 33 includes the plurality of supports 33a configured to protrude from the surface on which the products are placed, and spaced from each other at an interval corresponding to the above-described predetermined amount of movement of the belt 33. Therefore, the unmanned store 10 according to Embodiment 1 can correctly recognize the positions of the products on the belt 33 with a simple configuration, and accurately control the amount of movement of the belt 33 moving to convey the product. In addition, in the unmanned store 10 according to Embodiment 1, even though it is difficult to fix the products in a cylindrical shape such as cans and plastic bottles on the belt 33, the supports 33a can support the products to reliably convey the products, and therefore it is possible to prevent the wrong number of products from being ejected from the ejection port 31b. Therefore, the unmanned store 10 according to Embodiment 1 can facilitate business transactions with high security between the unmanned store 10 and the user with a simple configuration.

Furthermore, in the unmanned store 10 according to Embodiment 1, when the existing product is stored on the belt conveyor 32 at the storage position for the supplied product, the existing product is conveyed to the supply port 31a once and the belt 33 is moved toward the ejection port 31b by the above-described predetermined amount of movement. Therefore, in the unmanned store 10 according to Embodiment 1, even though the existing product is stored on the belt conveyor 32 at the storage position for the supplied product, it is possible to continuously supply the belt conveyor 32 with this product just behind the existing product. Therefore, the unmanned store 10 according to Embodiment 1 can store more number of products in the shelves 31 with a limited space, and consequently to sell various kinds of products all together in a compact space. Therefore, the unmanned store 10 according to Embodiment 1 can facilitate business transactions with high security between the unmanned store 10 and the user with a simple configuration.

Furthermore, the unmanned store 10 according to Embodiment 1 can acquire the number of the supplied products based on the number of times of movement of the belt 33. Therefore, the unmanned store 10 according to Embodiment 1 can correctly count the number of the products actually stored in the shelves 31 without complex means. By this means, the unmanned store 10 according to Embodiment 1 can accurately manage the inventory quantity of the products to correctly set the time to supply the products, and therefore steadily carry out the sales plan of the products. Therefore, the unmanned store 10 according to Embodiment 1 can facilitate business transactions with high security between the unmanned store 10 and the user with a simple configuration.

Furthermore, in the unmanned store 10 according to Embodiment 1, when the supplied product is different from the existing product on the belt conveyor 32, the product information of the supplied product is displayed on the selling apparatus 20 after the number of the existing product is zero and it is time to start to sell the supplied product. Therefore, the unmanned store 10 according to Embodiment 1 can prevent the supplied product from being mistakenly sold during the sale of the existing product. In addition, the unmanned store 10 according to Embodiment 1 can make the sales start time of the supplied product the same as the sales start time of the product of another unmanned store 10. By this means, the plurality of unmanned stores 10 according to Embodiment 1 can start to sell new products at the same time without help of any person. Accordingly, the unmanned store 10 according to Embodiment 1 can facilitate business transactions with high security between the unmanned store 10 and the user.

<Embodiment 2>

The unmanned store system 1 according to Embodiment 2 will be described. The same components and operations of the unmanned store system 1 according to Embodiment 2 as those of the unmanned store system 1 according to Embodiment 1 will not be described to avoid duplication of the description.

As described above, in the unmanned store system 1 according to Embodiment 1, when purchasing the product, the user visiting the unmanned store 10 uses the user terminal 80 to make settlement with the settlement server 60, and takes the product out of the take-out port 22. That is, for the unmanned store system 1 according to Embodiment 1, it is assumed that the user visiting the unmanned store 10 is the same as the user making the settlement.

In contrast, with the unmanned store system 1 according to Embodiment 2, the user visiting the unmanned store 10 may be different from the user making the settlement. With the present embodiment, the user visiting the unmanned store 10 may be referred to as "first user", and the user making settlement may be referred to as "second user." In addition, the user terminal 80 belonging to the first user may be referred to as "first user terminal", and the user terminal belonging to the second user may be referred to as "second user terminal."

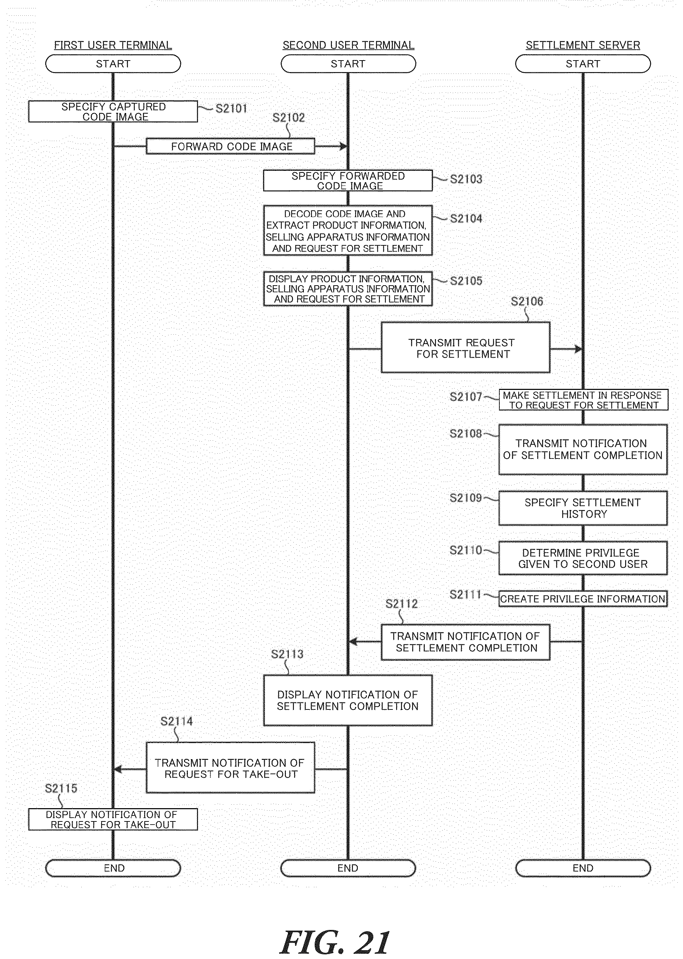

When the first user purchases the product, the first user terminal captures the code image G displayed on the display 21 of the selling apparatus 20 as illustrated in the step 1206 of Fig. 12. With the unmanned store system 1 according to Embodiment 2, a settlement process illustrated in Fig. 21 is performed as the settlement process illustrated in the step 1207, instead of the settlement process illustrated in Fig. 14.

Fig. 21 is a flowchart illustrating a settlement process according to Embodiment 2.

In step 2101, the first user terminal specifies the captured code image G.

In step 2102, the first user terminal forwards the specified code image G to the second user terminal. After that, the first user terminal waits until a notification of request for take-out is received from the second user terminal. The notification of request for take-out is transmitted to request the first user to take the designated product out of the take-out port 22.

In step 2103, the second user terminal specifies the forwarded code image G.

In step 2104, the second user terminal decodes the specified code image G and extracts the product information of the designated product, the selling apparatus information and the request for settlement.

In step 2105, the second user terminal displays the product information of the designated product, the selling apparatus information, and the request for settlement which have been extracted. The display items of the second user terminal may be the same as those illustrated in Fig. 15A according to Embodiment 1.

In step 2106, the second user terminal transmits the request for settlement including the user information, the product information of the designated product, and the selling apparatus information to the settlement server 60. The user information may be the identification information of the second user having the second user terminal, which is the terminal ID of the second user terminal. After that, the second user terminal waits until a notification of settlement completion is received from the settlement server 60.

Upon receiving the request for settlement transmitted from the second user terminal, the settlement server 60 makes the settlement of the designated product in response to the received request for settlement in step 2107.

In step 2108, the settlement server 60 creates a notification of settlement completion including the product information of the designated product and the selling apparatus information, and transmits the notification to the management server 50.

In step 2109, the settlement server 60 specifies the settlement history of the second user based on the user information.

In step 2110, the settlement server 60 determines a privilege given to the second user based on the settlement history.

In step 2111, the management server 60 creates privilege information indicating that the determined privilege is given to the second user.

In step 2112, the settlement server 60 creates the notification of settlement completion including the privilege information, and transmits the notification to the second user terminal. Then, the settlement server 60 ends the process.

Upon receiving the notification of settlement completion transmitted from the settlement server 60, the second user terminal displays the received notification of settlement completion in step 2113. The items displayed on the second user terminal may be the same as those illustrated in Fig. 15B according to Embodiment 1.

In step 2114, the second user terminal transmits a notification of request for take-out including the product information of the designated product and the selling apparatus information to the first user terminal. Then, the second user terminal ends the process.

Upon receiving the notification of request for take-out transmitted from the second user terminal, the first user terminal displays the received notification of request for take-out in step 2115. The first user terminal can display the product information of the designated product and the selling apparatus information as well as the notification of request for take-out.

In this way, even though the first user visiting the unmanned store 10 to take out the product is different from the second user doing the settlement process, the unmanned store system 1 according to Embodiment 2 allows appropriate settlement and take-out of the product. Therefore, for various cases, for example, when the first user is a child and the second user is a parent of the child who asks the child to go on an errand from a remote location, the unmanned store system 1 according to Embodiment 2 can respond flexibly to the cases while ensuring the security of the transactions. Consequently, the unmanned store system 1 according to Embodiment 2 can facilitate business transactions with high security between the unmanned store 10 and the user.

Moreover, in the unmanned store system 1 according to Embodiment 2, the first user terminal belonging to the first user transmits the request for settlement included in the captured code image G to the second user terminal belonging to the second user, and the second user terminal performs the settlement process with the settlement server 60, so that the settlement of the product can be made. Therefore, in the unmanned system 1 according to Embodiment 2, the information on the second user that the second user does not want the first user to know is not transmitted to the first user terminal. In particular, in the unmanned store system 1 according to Embodiment 2, the first user terminal merely forwards the captured code image G to the second user terminal, and the second user terminal can extract the request for settlement from the code image G. Therefore, the unmanned store system 1 according to Embodiment 2 can facilitate business transactions with high security between the unmanned store 10 and the user.

Moreover, in the unmanned store system 1 according to Embodiment 2, the second user terminal can display the product information before the settlement process is performed with the settlement server 60. By this means, in the unmanned store system 1 according to Embodiment 2, the second user can check if the target for the request for settlement included in the code image G captured by the first user terminal is the product that the second user requests the first user to purchase. By this means, the unmanned store system 1 according to Embodiment 2 allows the second user in a remote location to surely purchase a desired product. Consequently, the unmanned store 10 according to Embodiment 2 can facilitate business transactions with high security between the unmanned store 10 and the user.

<Embodiment 3>

The unmanned store system 1 according to Embodiment 3 will be described. The same components and operations of the unmanned store system 1 according to Embodiment 3 as those of the unmanned store system 1 according to Embodiments 1 and 2 will not be described to avoid duplication of the description.

As described above, for the unmanned store system 1 according to Embodiment 1, the management server 50 determines the recommended product based on the product information, the storage information, and the operating information, and changes the price of the determined recommended product based on the operating frequency which is one item of the operating information.

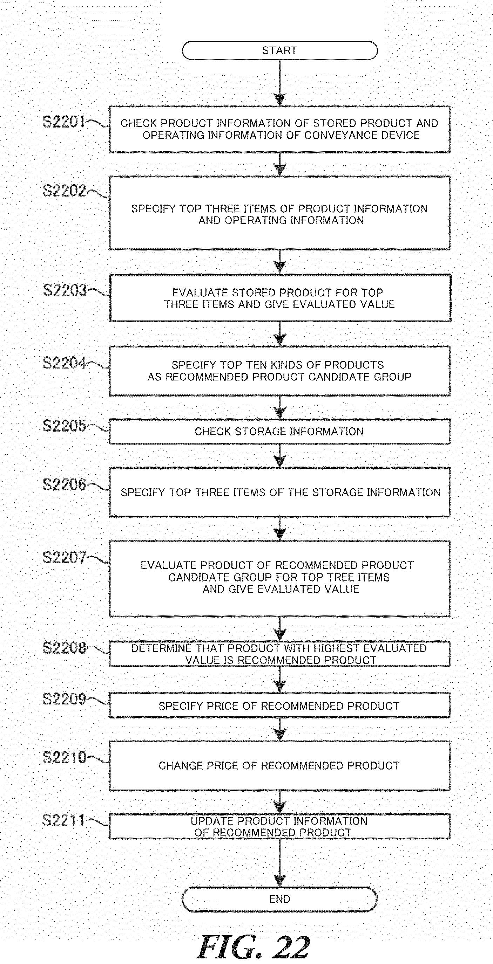

In contrast, for the unmanned store system 1 according to Embodiment 3, the management server 50 may change the price of the determined recommended product based on the inventory quantity which is one item of the storage information. In the unmanned store system 1 according to Embodiment 3, a recommended product determination process illustrated in Fig. 22 is performed as the recommended product determination process illustrated as the step **1201** of Fig. 12, instead of the recommended product determination process illustrated in Fig. 13.

Fig. 22 is a flowchart illustrating the recommended product determination process according to Embodiment 3.

In step 2201, the management server 50 checks the product information of the products stored in the automatic warehouse 30 and the operating information of the conveyance devices 42.

In step 2202, the management server 50 specifies the top three items with high priority of each of the product information and the operating information. As illustrated in Fig. 9A, the management server 50 specifies the sales period, the expiration date, and the price as the top three items of the product information with high priority. As illustrated in Fig. 9B, the management server 50 specifies the operating frequency, the operating state, and the maintenance time as the top three items of the operating information with high priority.

In step 2203, the management server 50 evaluates the products stored in the automatic warehouse 30 for the specified top three items, and gives evaluated values. For example, for the top three items of the product information with high priority, the management server 50 may give a high evaluated value to the product having an upcoming end of the sales period, an upcoming expiration date, and a high price. For example, the management server 50 focuses attention on the belt conveyor 32 as the conveyance device 42, and may give a high evaluated value to the product stored on the belt conveyor 32 which has a low operating frequency, is being operated, and has an upcoming maintenance time. For example, the management server 50 focuses attention on the elevator 35 as the conveyance device 42, and may give a high evaluated value to the product stored in the shelf 31 corresponding to the elevator 35 which has a low operating frequency, is being operated, and has an upcoming maintenance time.

In step 2204, the management server 50 specifies the top ten kinds of products with high evaluated values as a recommended product candidate group.

In step 2205, the management server 50 checks the storage information of the products stored in the automatic warehouse 30.

In step 2206, the management server 50 specifies the top three items of the storage information with high priority. As illustrated in Fig. 9A, the management server 50 specifies the inventory quantity, the sales state and the storage period as the top three items of the storage information with high priority.

In step 2207, the management server 50 evaluates the products of the recommended product candidate group for the top tree items, and gives evaluated values. For example, the management server 50 may give a high evaluated value to the product being available for sale, and having an ejection date within the storage period in the past.

In step 2208, the management server 50 determines that the product with the highest evaluated value is the recommended product.

In step 2209, the management server 50 checks the product information of the determined recommended product, and specifies the current price of the determined recommended product.

In step 2210, the management server 50 changes the price of the recommended product, based on the inventory quantity which is one of the top items of the storage information.

In step 2211, the management server 50 updates the product information of the recommended product to reflect the changed price, and ends the process. After that, the management server 50 transmits the product information of the recommended product with the changed price to the selling apparatus 20.

As described above, the unmanned store system 1 according to Embodiment 3 can change the price of the determined recommended product, based on the inventory quantity which is one item of the storage information. Therefore, the unmanned store system 1 according to Embodiment 3 can more efficiently sell the products. Consequently, the unmanned store system 1 according to Embodiment 3 can facilitate business transactions with high security between the unmanned store 10 and the user.

<Others>

With the above-described embodiments, the management server 50 determines the recommended product in the recommended product determination process, based on the product information, the storage information, and the operating information, but this is by no means limiting. The management server 50 may determine the recommended product based on the sales information, the storage information, or the operating information. In addition, the management server 50 determines the recommended product by using the priority and the evaluated values, but this is by no means limiting. The management server 50 may determine the recommended product by using another index including the discretion of the operator. Moreover, the management server 50 changes the price of the determined recommended product, but this is by no means limiting. The management server 50 may change any item other than the price, for example, may give a privilege. Furthermore, with the above-described embodiments, the management server 50 determines the recommended product in the recommended product determination process, but this is by no means limiting. The recommended product may be determined by the operator.

Moreover, with the above-described embodiments, the door 23 of the take-out port 22 is configured to be automatically opened when the designated product reaches the take-out port 22, but this is by no means limiting. The door 23 of the take-out port 22 may be automatically opened when the designated product reaches the take-out port 22 and the user is authenticated to take out the designated product. For example, the selling apparatus 20 may display a password input window on the display 21, and authenticate the user inputting the correct password. The password may be, for example, a one-time password generated by the settlement server 60. After making the settlement in response to the request for settlement, the settlement server 60 generates the one-time password, and transmits the notification of settlement completion including the one-time password to the management server 50 and the user terminal 80. Upon receiving the notification of conveyance completion transmitted from the automatic warehouse 30, the management server 50 may transmit the one-time password with the destination information to the selling apparatus 20. By this means, the user can input the correct password to the selling apparatus 20, and the selling apparatus 20 can collate the inputted password with the password transmitted from the management server 50. Therefore, the unmanned store system 1 can improve the safety of the business transaction even though the unmanned store 10 is not notified of the personal information of the user.

In addition, with the above-described embodiments, the take-out port 22 as the destination of the designated product is changed depending on the conveyance time, but this is by no means limiting. The take-out port 22 may be predetermined. For example, the destination of the designated product may be predetermined as the take-out port 22 indicated by the selling apparatus information. That is, the destination of the designated product may be predetermined as the take-out port 22 near the waiting position of the user who is going to purchase the product. By this means, the user can take out the purchased product right there, and it is possible to prevent the user from getting a wrong product purchased by a different user.

Alternatively, the destination of the designated product may be predetermined as the take-out port 22 designated by the user. The destination of the designated product may be predetermined as the take-out port 22 designated by the user as follows. For example, the user inputs the information of the take-out port 22 designated by the user to the user terminal 80 in the settlement process, and transmits the request for settlement including the information of the take-out port 22 to the settlement server 60. The settlement server 60 may transmit the notification of settlement completion including the information of the take-out port 22 designated by the user to the management server 50. By this means, the unmanned store system 1 can improve the convenience of the user without using complex means.

When designating the destination of the designated product, the user may input an estimated time to take out the designated product to the user terminal 80 as well as the information of the take-out port 22, and transmit the request for settlement including the estimated time to the settlement server 60. The settlement server 60 may transmit the notification of settlement completion including the information of the estimated time to take out the designated product to the management server 50. By this means, the user can take out the designated product at the desired time, and therefore the unmanned store system 1 can improve the convenience of the user.

With the above-described embodiments, the unmanned store system 1 corresponds to an example of "unmanned store system" recited in the claims. The selling apparatus 20 corresponds to an example of "selling apparatus" recited in the claims. The automatic warehouse 30 corresponds to an example of "automatic warehouse" recited in the claims. The management server 50 corresponds to an example of "management server" recited in the claims. The conveyance device 42 corresponds to an example of "conveyance device" recited in the claims. The settlement server 60 corresponds to an example of "settlement server" recited in the claims. The first user terminal corresponds to an example of "user information terminal" recited in the claims. The second user terminal corresponds to an example of "another information terminal" recited in the claims.

It is obvious to a person skilled in the art that the features in the above-described embodiments may be compatible with each other.

The above description is not intended to limit the subject matter of the invention, but is illustrative only. Therefore, it is obvious to a person skilled in the art that the embodiments may be modified and changed without deviating from the scope of the claims.

The terms used in the above-described embodiments and the claims should not be construed as limitations. For example, "including" "having" or "comprising" elements should not be construed as "exclusively consisting of" the elements.

**Reference Signs List**

| | |
|---|---|
| 1 | unmanned store system |
| 10 | unmanned store |
| 11 | sales area |
| 12 | partition wall |
| 13 | gate |
| 20 | selling apparatus |
| 21 | display |
| 22 | take-out port |
| 23 | door |
| 24 | take-out port sensor |
| 25 | tray |
| 25a | back end |
| 26 | camera |
| 27 | speaker |
| 28 | communication unit |
| 29 | controller |
| 30 | automatic warehouse |
| 31 | shelf |
| 31a | supply port |
| 31b | ejection port |
| 31c | back plate |
| 31d | shelf plate |
| 32 | belt conveyor |
| 33 | belt |
| 33a | support |
| 34 | supply port sensor |
| 35 | elevator |
| 36 | pillar |
| 37 | bucket |
| 38 | pusher |
| 39 | cylinder |
| 40 | contact part |
| 41 | transport mechanism |
| 42 | conveyance device |
| 43 | temperature adjustment device |
| 44 | stored product monitor |
| 45 | conveyance device monitor |
| 46 | communication unit |
| 47 | controller |
| 50 | management server |
| 51 | product sales management unit |
| 52 | conveyance device management unit |
| 53 | communication unit |
| 54 | controller |
| 60 | settlement server |
| 70 | operator terminal |
| 80 | user terminal |
| 221 | first take-out port |
| 222 | second take-out port |
| 223 | third take-out port |
| 251 | first tray |
| 252 | second tray |
| 253 | third tray |
| 311 | first shelf |
| 312 | second shelf |
| 313 | third shelf |
| 351 | first elevator |
| 352 | second elevator |
| 353 | third elevator |
| 371 | first bucket |
| 372 | second bucket |
| 373 | third bucket |
| 381 | first pusher |
| 382 | second pusher |
| 383 | third pusher |

**Claims**

1. An unmanned store system (1) comprising:

a selling apparatus (20) configured to sell a product to a user visiting an unmanned store (10);
an automatic warehouse (30) configured to store the product sold by the selling apparatus (20); and
a management server (50) configured to manage the product stored in the automatic warehouse (30), wherein:

the selling apparatus (20) displays product information of the product stored in the automatic warehouse (30) and a code image (G) including a request for settlement of the product, corresponding the product information to the core image (G);
when the settlement is made in response to the request for settlement included the code image (G), the management server (50) transmits a conveyance command to the automatic warehouse (30) to convey the product to the selling apparatus (20); and
the automatic warehouse (30) conveys the product to the selling apparatus (20), based on the conveyance command transmitted from the management server (50).

2. The unmanned store system (1) according to claim 1, wherein:

the automatic warehouse (30) transmits storage information indicating a storage state of the product to the management server (50);
the management server (50) determines a recommended product for the user based on the storage information transmitted from the automatic warehouse (30), and transmits the product information of the recommended product to the selling apparatus (20); and
the selling apparatus (20) displays the product information of the recommended product transmitted from the management server (50) and the code image (G) including the request for settlement of the recommended product, corresponding the product information to the code image (G).

3. The unmanned store system (1) according to claim 1, wherein:

the automatic warehouse (30) transmits operating information to the management server (50), the operating information indicating an operating state of a conveyance device (42) configured to convey the product to the selling apparatus (20);
the management server (50) determines a recommended product for the user based on the operating information transmitted from the automatic warehouse (30), and transmits the product information of the recommended product to the selling apparatus (20); and
the selling apparatus (20) displays the product information of the recommended product transmitted from the management server (50) and the code image (G) including the request for settlement of the recommended product, corresponding the product information to the code image (G).

4. The unmanned store system (1) according to claim 2, wherein:

the product information includes a price of the product;
the storage information includes an inventory quantity of the product;
the management server (50) changes the price of the recommended product based on the inventory quantity, and transmits the product information of the recommended product at a changed price to the selling apparatus (20); and
the selling apparatus (20) displays the product information and the code image (G) including the changed price of the recommended product.

5. The unmanned store system (1) according to claim 3, wherein:

the product information includes a price of the product;
the operating information includes an operating frequency of the conveyance device (42);
the management server (50) changes the price of the recommended product based on the operating frequency, and transmits a changed price of the recommended product to the selling apparatus (20); and
the selling apparatus (20) displays the product information and the code image (G) including the changed price of the recommended product.

6. An unmanned store system (1) comprising:

a selling apparatus (20) configured to display product information to a user visiting an unmanned store (1) and sell a product;
an automatic warehouse (30) configured to store the product sold by the selling apparatus (20) and convey the product to the selling apparatus (20);
a management server (50) configured to manage the product stored in the automatic warehouse (50);
a settlement server (60) configured to make settlement of the product designated by the user to purchase the product; and

a user information terminal belonging to the user, wherein:

the user information terminal transmits a request for settlement of the product to another information terminal which is different from the user information terminal;
the settlement server (60) makes settlement in response to the request for settlement transmitted from the another information terminal, and transmits a notification of settlement completion indicating that the settlement is completed to the management server (50); and
upon receiving the notification of settlement completion transmitted from the settlement server (60), the management server (50) conveys the product from the automatic warehouse (30) to the selling apparatus (20).

7. The unmanned store system (1) according to claim 6, wherein:

the selling apparatus (20) displays product information of the product stored in the automatic warehouse (30) and a code image (G) including the request for settlement of the product, corresponding the product information to the code image (G);
when capturing the code image (G) corresponding to the product, the user information terminal transmits the request for settlement included in the code image (G) to the another information terminal; and
upon receiving the request for settlement transmitted from the user information terminal, the another information terminal transmits the request for settlement to the settlement server (60).

8. The unmanned store system (1) according to claim 7, wherein:

the code image (G) includes the product information of the product;
the user information terminal transmits the request for settlement and the product information included in the captured code image (G) to the another information terminal; and
upon receiving the request for settlement and the product information transmitted from the user information terminal, the another information terminal displays the product information before transmitting the request for settlement to the settlement server (60).

9. The unmanned store system (1) according to one of claims 7 and 8, wherein:

when capturing the code image (G) corresponding to the product, the user information terminal forwards the code image (G) to the another information terminal; and
upon receiving the code image (G) transmitted from the user information terminal, the another information terminal decodes the code image (G) to extract the request for settlement, and transmits the request for settlement to the settlement server (60).

*FIG. 1*

UPPER

FRONT — BACK
WIDTH
DIRECTION

LOWER

*FIG. 2*

FIG. 3

PRODUCT INFORMATION

CODE IMAGE G

UPPER

WIDTH DIRECTION

FRONT

LOWER

20

| 24 | 29 | 23 |
| TAKE-OUT SENSOR | CONTROLLER | DOOR |

| 26 | | 27 |
| CAMERA | | SPEAKER |

| 28 | | 21 |
| COMMUNICATION UNIT | | DISPLAY |

*FIG. 4*

**FIG. 5**

## FIG. 6A

31
31d
32
38
43

UPPER
WIDTH
DIRECTION
FRONT
LOWER

## FIG. 6B

24  23  22  24

12
25
38
25a
35 {36
{37
41
31

30

FRONT
WIDTH
DIRECTION
UPPER
BACK

## FIG. 6C

## FIG. 6D

*FIG. 7*

30

34 SUPPLY PORT SENSOR → 47 CONTROLLER → 32 BELT CONVEYOR

44 STORED PRODUCT MONITOR → CONTROLLER → 35 ELEVATOR

45 CONVEYANCE DEVICE MONITOR → CONTROLLER → 38 PUSHER

→ 41 TRANSPORT MECHANISM

42

46 COMMUNICATION UNIT ↔ CONTROLLER → 43 TEMPERATURE ADJUSTMENT DEVICE

*FIG. 8*

50

54 CONTROLLER ↔ 51 PRODUCT SALES MANAGEMENT UNIT

54 CONTROLLER ↔ 52 CONVEYANCE DEVICE MANAGEMENT UNIT

54 CONTROLLER ↔ 53 COMMUNICATION UNIT

# FIG. 9A

| | ITEM | | PRIORITY | 1 | 2 | 3 | 4 |
|---|---|---|---|---|---|---|---|
| PRODUCT INFORMATION | PRODUCT ID | | – | ID001 | ID002 | ID003 | ID004 |
| | NAME | | – | na001 | na002 | na003 | na004 |
| | IMAGE | | – | g001 | g002 | g003 | g004 |
| | CATEGORY | | – | c001 | c002 | c003 | c004 |
| | PRODUCT NUMBER | | – | mn001 | mn002 | mn003 | mn004 |
| | MAKER | | C | p001 | p002 | p003 | p004 |
| | PRODUCTION AREA | | C | pa001 | pa002 | pa003 | pa004 |
| | PRICE | | B | 001 | 002 | 003 | 004 |
| | PRESERVATION ENVIRONMENT | | D | FREEZING | COLD | ROOM TEMPERATURE | HEATING |
| | SIZE | LENGTH | C | l001 | l002 | l003 | l004 |
| | | WIDTH | | w001 | w002 | w003 | w004 |
| | | HEIGHT | | h001 | h002 | h003 | h004 |
| | SHAPE | | D | box1 | bottle2 | tube3 | can4 |
| | SALES PERIOD | START | A | – | – | yyyy/m1/d3 | yyyy/m1/d4 |
| | | END | | – | yyyy/m2/d2 | – | yyyy/m2/d4 |
| | EXPIRATION DATE | | A | yyyy/mm/d1 | yyyy/mm/d2 | yyyy/mm/d3 | yyyy/mm/d4 |
| STORAGE INFORMATION | STORAGE POSITION | SHELF | C | a001 | a002 | a003 | a004 |
| | | TIER | | b001 | b002 | b003 | b004 |
| | | AREA | | c001 | c002 | c003 | c004 |
| | STORAGE PERIOD | SUPPLY | B | yyyy/1m/d1 | yyyy/1m/d2 | yyyy/1m/d3 | yyyy/1m/d4 |
| | | EJECTION | | yyyy/1m/d5 | yyyy/1m/d6 | yyyy/1m/d7 | yyyy/1m/d8 |
| | STORAGE ENVIRONMENT | | D | FREEZING | COLD | ROOM TEMPERATURE | HEATING |
| | INVENTORY QUANTITY | | A | q001 | q002 | q003 | q004 |
| | SALES STATE | | A | AVAILABLE | AVAILABLE | UNAVAILABLE | AVAILABLE |
| SALES INFORMATION | AMOUNT OF SALES | | C | 101 | 102 | 103 | 104 |
| | NUMBER OF SALES | | C | t001 | t002 | t003 | t004 |
| | CUSTOMER TYPE | | B | co001 | co002 | co003 | co004 |
| | TIME ZONE FOR PURCHASE | | B | tz001 | tz002 | tz003 | tz004 |
| | USER EVALUATION | | A | f001 | f002 | f003 | f004 |

# FIG. 9B

| | ITEM | | PRIORITY | 1 | 2 | 3 | 4 |
|---|---|---|---|---|---|---|---|
| OPERATING INFORMATION | DEVICE ID | | – | id101 | id102 | id103 | id104 |
| | NAME | | – | BELT CONVEYOR | BELT CONVEYOR | BELT CONVEYOR | BELT CONVEYOR |
| | CATEGORY | | – | c101 | c102 | c103 | c104 |
| | PRODUCT NUMBER | | – | mn101 | mn102 | mn103 | mn104 |
| | MAKER | | – | pp101 | pp102 | pp103 | pp104 |
| | INSTALLATION POSITION | SHELF | C | a001 | a001 | a001 | a001 |
| | | TIER | | b001 | b001 | b001 | b001 |
| | | AREA | | c001 | c002 | c003 | c004 |
| | | OTHERS | | – | – | – | – |
| | OPERATING TIME | START | C | tt:t1 | tt:t2 | – | tt:t4 |
| | | END | | t1:t1 | t2:t2 | – | t4:t4 |
| | OPERATING FREQUENCY | | A | 10/DAY | 5/DAY | – | 1/DAY |
| | OPERATING STATE | | A | OPERATING | WAITING | STOPPED | OPERATING |
| | MAINTENANCE TIME | START | B | yyy1/mm/d1 | yyy1/mm/d2 | yyy1/mm/d3 | yyy1/mm/d4 |
| | | END | | yyy1/mm/d5 | yyy1/mm/d6 | yyy1/mm/d7 | yyy1/mm/d8 |

**FIG. 10**

START

S1101 — SPECIFY STORAGE POSITION AND SIZE OF SUPPLIED PRODUCT

S1102 — DETERMINE WHETHER EXISTING PRODUCT IS STORED — No

Yes

S1103 — MOVE BELT TOWARD SUPPLY PORT TO POSITION EXISTING PRODUCT AT SUPPLY PORT

S1104 — DETERMINE WHETHER EXISTING PRODUCT IS LOCATED AT SUPPLY PORT — No

Yes

S1105 — MOVE BELT TOWARD EJECTION PORT BY PREDETERMINED AMOUNT OF MOVEMENT CORRESPONDING TO SIZE OF SUPPLIED PRODUCT

S1106 — INFORM THAT IT IS POSSIBLE TO START TO SUPPLY PRODUCT

SUPPLY PRODUCT

S1107 — DETERMINE WHETHER SUPPLIED PRODUCT IS LOCATED AT SUPPLY PORT — No

Yes

S1108 — MOVE BELT TOWARD EJECTION PORT BY PREDETERMINED AMOUNT OF MOVEMENT CORRESPONDING TO SIZE OF SUPPLIED PRODUCT

S1109 — INCREMENT NUMBER OF TIMES OF MOVEMENT OF BELT

S1110 — DETERMINE WHETHER SUPPLY OF PRODUCT IS COMPLETED — No

Yes

S1111 — ACQUIRE NUMBER OF PRODUCT ACTUALLY SUPPLIED

S1112 — CALCULATE TARGET AMOUNT OF MOVEMENT OF BELT TO EJECTION PORT

S1113 — MOVE BELT TOWARD EJECTION PORT BY TARGET AMOUNT OF MOVEMENT

S1114 — CREATE STORAGE INFORMATION

END

## FIG. 11

FIG. 12

```
                    ┌─────────────────┐
                    │      START      │
                    └─────────────────┘
                             │
                             ▼
S1301 ──  ┌───────────────────────────────────────┐
          │  CHECK PRODUCT INFORMATION AND         │
          │  STORAGE INFORMATION OF STORED PRODUCT │
          └───────────────────────────────────────┘
                             │
                             ▼
S1302 ──  ┌───────────────────────────────────────┐
          │  SPECIFY TOP THREE ITEMS OF PRODUCT    │
          │  INFORMATION AND STORAGE INFORMATION   │
          └───────────────────────────────────────┘
                             │
                             ▼
S1303 ──  ┌───────────────────────────────────────┐
          │  EVALUATE STORED PRODUCT FOR TOP       │
          │  THREE ITEMS AND GIVE EVALUATED VALUE  │
          └───────────────────────────────────────┘
                             │
                             ▼
S1304 ──  ┌───────────────────────────────────────┐
          │  SPECIFY TOP TEN KINDS OF PRODUCT      │
          │  AS RECOMMENDED PRODUCT GROUP          │
          └───────────────────────────────────────┘
                             │
                             ▼
S1305 ──  ┌───────────────────────────────────────┐
          │  CHECK OPERATING INFORMATION           │
          │  OF CONVEYANCE DEVICE                  │
          └───────────────────────────────────────┘
                             │
                             ▼
S1306 ──  ┌───────────────────────────────────────┐
          │  SPECIFY TOP THREE ITEMS               │
          │  OF OPERATING INFORMATION              │
          └───────────────────────────────────────┘
                             │
                             ▼
S1307 ──  ┌───────────────────────────────────────┐
          │  EVALUATE PRODUCT OF THE RECOMMENDED   │
          │  PRODUCT GROUP AND GIVE EVALUATED VALUE│
          └───────────────────────────────────────┘
                             │
                             ▼
S1308 ──  ┌───────────────────────────────────────┐
          │  DETERMINE PRODUCT WITH HIGHEST        │
          │  EVALUATED VALUE AS RECOMMENDED PRODUCT│
          └───────────────────────────────────────┘
                             │
                             ▼
S1309 ──  ┌───────────────────────────────────────┐
          │  SPECIFY PRICE OF RECOMMENDED PRODUCT  │
          └───────────────────────────────────────┘
                             │
                             ▼
S1310 ──  ┌───────────────────────────────────────┐
          │  CHANGE PRICE OF RECOMMENDED PRODUCT   │
          └───────────────────────────────────────┘
                             │
                             ▼
S1311 ──  ┌───────────────────────────────────────┐
          │  UPDATE PRODUCT INFORMATION            │
          │  OF RECOMMENDED PRODUCT                │
          └───────────────────────────────────────┘
                             │
                             ▼
                    ┌─────────────────┐
                    │       END       │
                    └─────────────────┘
```

## FIG. 13

USER TERMINAL
START

SPECIFY CAPTURED CODE IMAGE — S1401

DECODE CODE IMAGE AND EXTRACT PRODUCT
INFORMATION, SELLING APPARATUS INFORMATION,
AND REQUEST FOR SETTLEMENT — S1402

DISPLAY PRODUCT INFORMATION AND
REQUEST FOR SETTLEMENT — S1403

S1404

TRANSMIT REQUEST FOR SETTLEMENT

SETTLEMENT SERVER
START

S1405 — MAKE SETTLEMENT IN RESPONSE
TO REQUEST FOR SETTLEMENT

S1406 — TRANSMIT NOTIFICATION OF
SETTLEMENT COMPLETION

S1407 — SPECIFY SETTLEMENT HISTORY

S1408 — DETERMINE PRIVILEGE GIVEN TO USER

S1409 — CREATE PRIVILEGE INFORMATION

S1410

TRANSMIT NOTIFICATION OF SETTLEMENT COMPLETION

S1411

DISPLAY NOTIFICATION OF SETTLEMENT COMPLETION

END

END

## FIG. 14

*FIG. 15A*

DEAR MR./MS.●●
       THANK YOU FOR YOUR PURCHASE

<PRODUCT INFORMATION>
• PRODUCT ID:○○
• PRODUCT NAME:○○
• PRICE:○○

IMAGE OF PRODUCT

<SETTLEMENT METHOD INFORMATION>
• CREDIT-CARD NUMBER:○○○
• NUMBER OF PAYMENTS:○○○

<SELLING APPARATUS INFORMATION>
• SELLING APPARATUS NUMBER:○○○
　(TAKE-OUT PORT NUMBER:○○○)
　＊PLEASE NOTE THAT TAKE-OUT PORT MAY BE CHANGED

PLEASE CONFIRM THE ABOVE

| DO NOT SEND | | SEND |

~80

*FIG. 15B*

DEAR MR./MS.●●
       YOUR PAYMENT IS COMPLETED

<PRODUCT INFORMATION>
• PRODUCT ID:○○
• PRODUCT NAME:○○
• PRICE:○○

IMAGE OF PRODUCT

<SETTLEMENT METHOD INFORMATION>
• CREDIT-CARD NUMBER:○○○
• NUMBER OF PAYMENTS:○○○

<SELLING APPARATUS INFORMATION>
• SELLING APPARATUS NUMBER:○○○
（TAKE-OUT PORT NUMBER:○○○）
＊PLEASE NOTE THAT TAKE-OUT PORT MAY BE CHANGED

<PRIVILEGE INFORMATION>
• RANK OF CUSTOMER: GOLD
• PLEASE ENJOY SAVING 5% OFF ON ALL PRODUCTS
                       FROM YOUR NEXT PURCHASE

THANK YOU FOR USING OUR SERVICES

~80

**FIG. 16**

START

SPECIFY PRODUCT INFORMATION AND
SELLING APPARATUS INFORMATION INCLUDED
IN NOTIFICATION OF SETTLEMENT COMPLETION — S1601

SPECIFY STORAGE INFORMATION
OF DESIGNATED PRODUCT — S1602

SPECIFY CONVEYANCE PATH FROM
STORAGE POSITION OF DESIGNATED
PRODUCT TO TAKE-OUT PORT — S1603

CALCULATE CONVEYANCE TIME
FOR SPECIFIED CONVEYANCE PATH — S1604

S1605
DETERMINE WHETHER CONVEYANCE
TIME IS WITHIN ALLOWABLE RANGE — No
Yes

DETERMINE THAT DESTINATION OF DESIGNATED
PRODUCT IS TAKE-OUT PORT INDICATED
BY SELLING APPARATUS INFORMATION
S1606

SEARCH ANY OTHER TAKE-OUT PORT NEAR
TAKE-OUT PORT INDICATED BY SELLING
APPARATUS INFORMATION — S1607

SPECIFY CONVEYANCE PATH FROM
STORAGE POSITION OF DESIGNATED
PRODUCT TO TAKE-OUT PORT — S1608

CALCULATE CONVEYANCE TIME FOR
SPECIFIED CONVEYANCE PATH — S1609

S1610 — DETERMINE WHETHER CONVEYANCE
TIME IS WITHIN ALLOWABLE RANGE — No
Yes

S1611 — DETERMINE THAT DESTINATION OF
DESIGNATED PRODUCT IS SEARCHED
TAKE-OUT PORT

S1612 — DETERMINE WHETHER CONVEYANCE
TIME HAS BEEN CHECKED FOR ALL
TAKE-OUT PORTS — No
Yes

S1613 — DETERMINE THAT DESTINATION OF DESIGNATED
PRODUCT IS TAKE-OUT PORT INDICATED BY
SELLING APPARATUS INFORMATION

CREATE DESTINATION INFORMATION
INDICATING TAKE-OUT PORT
AS DESTINATION — S1614

CREATE CONVEYANCE COMMAND — S1615

END

```
                          ╭─────────────╮
                          │    START    │
                          ╰─────────────╯
                                 │
                                 ▼
   S1701 ──┌────────────────────────────────────────┐
           │ SPECIFY STORAGE POSITION AND SIZE OF    │
           │      DESIGNATED PRODUCT AND             │
           │   THE TAKE-OUT PORT AS DESTINATION      │
           └────────────────────────────────────────┘
                                 │
   S1702 ──┌────────────────────────────────────────┐
           │ SPECIFY CONVEYANCE PATH FROM STORAGE    │
           │ POSITION OF DESIGNATED PRODUCT TO       │
           │   THE TAKE-OUT PORT AS DESTINATION      │
           └────────────────────────────────────────┘
                                 │
                        ────►◄────  ⑦
                                 │
   S1703 ─┐                      ▼
          │   ╱ DETERMINE WHETHER ELEVATOR ╲
          │  ╱ CORRESPONDING TO SHELF AT LEVEL OF ╲
     No ◄─┤  ╲  STORAGE POSITION OF DESIGNATED  ╱
          │   ╲  PRODUCT IS AVAILABLE  ╱
          │              │ Yes
          │              ▼            S1704
          │   ┌────────────────────────────────────┐
          │   │    MOVE BUCKET TO TIER AT LEVEL OF  │
          │   │ STORAGE POSITION OF DESIGNATED PRODUCT│
          │   └────────────────────────────────────┘
          │              │            S1705
          │   ┌────────────────────────────────────┐
          │   │  MOVE BELT TOWARD EJECTION PORT TO  │
          │   │ PUT DESIGNATED PRODUCT IN ELEVATOR  │
          │   └────────────────────────────────────┘
          │              │            S1706
          │   ┌────────────────────────────────────┐
          │   │  MOVE BUCKET TO PREDETERMINED       │
          │   │       TIER WITH PUSHER              │
          │   └────────────────────────────────────┘
          │              │
          └─────────────►│            S1707
                         ▼
             ╱ DETERMINE WHETHER TRANSPORT ╲  Yes
             ╲ MECHANISM IS TRANSPORTING PRODUCT ╱ ───► ⑥
                         │ No
   S1708 ─┐             ▼
          │   ╱ DETERMINE WHETHER DESTINATION ╲
          │  ╱  OF PRODUCT IN ELEVATOR IS      ╲  No
          │  ╲    DIFFERENT TAKE-OUT PORT      ╱ ───────────┐
          │             │ Yes                              │
          │             ▼                                  ▼      S1709
   S1710 ─┐ ┌──────────────────────────────┐  ┌──────────────────────────────┐
          │ │ CAUSE PUSHER CORRESPONDING TO │  │ CAUSE PUSHER TO PUSH PRODUCT IN│
          │ │ ELEVATOR TO PUSH PRODUCT IN ORDER│ │ ELEVATOR TO BRING PRODUCT TO  │
          │ │ TO CONVEY PRODUCT IN ELEVATOR TO │ │ TAKE-OUT PORT AS DESTINATION  │
          │ │     TRANSPORT MECHANISM        │  └──────────────────────────────┘
          │ └──────────────────────────────┘              │
   S1711 ─┐ ┌──────────────────────────────┐              │
          │ │ CAUSE TRANSPORT MECHANISM TO  │              │
          │ │ TRANSPORT PRODUCT TO DIFFERENT│              │
          │ │ TAKE-OUT PORT AS DESTINATION  │              │
          │ └──────────────────────────────┘              │
   S1712 ─┐ ┌──────────────────────────────┐              │
          │ │ CAUSE PUSHER TO PUSH TRANSPORTED│            │
          │ │  PRODUCT TO BRING PRODUCT TO  │              │
          │ │    DIFFERENT TAKE-OUT PORT    │              │
          │ └──────────────────────────────┘              │
          │             │◄─────────────────────────────────┘
   S1720 ─┐            ▼
          │   ╱ DETERMINE WHETHER DESIGNATED ╲
          │  ╱  PRODUCT HAS BEEN CONVEYED TO   ╲
     No ◄─┤  ╲  TAKE-OUT PORT AS DESTINATION  ╱
          │             │ Yes
   S1721 ─┐ ┌──────────────────────────────┐
          │ │   CREATE STORAGE INFORMATION  │
          │ │     OF DESIGNATED PRODUCT     │
          │ └──────────────────────────────┘
          │             │
   S1722 ─┐ ┌──────────────────────────────┐
          │ │    CREATE NOTIFICATION OF     │
          │ │    CONVEYANCE COMPLETION      │
          │ └──────────────────────────────┘
                        │
                        ▼
                 ╭─────────────╮
                 │     END     │
                 ╰─────────────╯
```

## FIG. 17A

⑥

S1713

DETERMINE WHETHER PRODUCT STORED
IN STORAGE POSITION WHICH IS NOT FOR
THE DESIGNATED PRODUCT IS CONVEYED — No

Yes

S1714

SPECIFY STORAGE POSITION AND SIZE
OF DIFFERENT PRODUCT
AND TAKE-OUT PORT AS DESTINATION

S1715

SPECIFY CONVEYANCE PATH FROM STORAGE
POSITION TO TAKE-OUT PORT AS DESTINATION
OF DIFFERENT PRODUCT

S1716

DETERMINE WHETHER ELEVATOR
CORRESPONDING TO SHELF AT LEVEL OF
STORAGE POSITION OF DIFFERENT
PRODUCT IS AVAILABLE — No

Yes

S1717

MOVE BUCKET TO TIER AT LEVEL OF STORAGE
POSITION OF DIFFERENT PRODUCT

S1718

MOVE BELT TO EJECTION PORT IN ORDER
TO PUT DIFFERENT PRODUCT IN ELEVATOR

S1719

MOVE BUCKET TO PREDETERMINED
TIER WITH PUSHER

⑦

*FIG. 17B*

FIG. 18A

FIG. 18B

**FIG. 18C**

311

41

UPPER
BACK
FRONT WIDTH DIRECTION
LOWER

221 251 351 371

**FIG. 18D**

311

41

381

UPPER
BACK
FRONT WIDTH DIRECTION
LOWER

221 251 351 371

FIG. 19A

FIG. 19B

UPPER
BACK
FRONT
WIDTH DIRECTION
LOWER

*FIG. 19C*

FIG. 20A

FIG. 20B

FIG. 20C

FIRST USER TERMINAL
( START )

SECOND USER TERMINAL
( START )

SETTLEMENT SERVER
( START )

| SPECIFY CAPTURED CODE IMAGE | ~S2101 |

S2102

FORWARD CODE IMAGE →

SPECIFY FORWARDED CODE IMAGE ~S2103

DECODE CODE IMAGE AND EXTRACT PRODUCT INFORMATION, SELLING APPARATUS INFORMATION AND REQUEST FOR SETTLEMENT ~S2104

DISPLAY PRODUCT INFORMATION, SELLING APPARATUS INFORMATION AND REQUEST FOR SETTLEMENT ~S2105

S2106

TRANSMIT REQUEST FOR SETTLEMENT →

S2107~ MAKE SETTLEMENT IN RESPONSE TO REQUEST FOR SETTLEMENT

S2108~ TRANSMIT NOTIFICATION OF SETTLEMENT COMPLETION

S2109~ SPECIFY SETTLEMENT HISTORY

S2110~ DETERMINE PRIVILEGE GIVEN TO SECOND USER

S2111~ CREATE PRIVILEGE INFORMATION

S2112

← TRANSMIT NOTIFICATION OF SETTLEMENT COMPLETION

S2113

DISPLAY NOTIFICATION OF SETTLEMENT COMPLETION

S2114

← TRANSMIT NOTIFICATION OF REQUEST FOR TAKE-OUT

S2115

DISPLAY NOTIFICATION OF REQUEST FOR TAKE-OUT

( END )          ( END )          ( END )

## FIG. 21

53

START

S2201 — CHECK PRODUCT INFORMATION OF STORED PRODUCT AND OPERATING INFORMATION OF CONVEYANCE DEVICE

S2202 — SPECIFY TOP THREE ITEMS OF PRODUCT INFORMATION AND OPERATING INFORMATION

S2203 — EVALUATE STORED PRODUCT FOR TOP THREE ITEMS AND GIVE EVALUATED VALUE

S2204 — SPECIFY TOP TEN KINDS OF PRODUCTS AS RECOMMENDED PRODUCT CANDIDATE GROUP

S2205 — CHECK STORAGE INFORMATION

S2206 — SPECIFY TOP THREE ITEMS OF THE STORAGE INFORMATION

S2207 — EVALUATE PRODUCT OF RECOMMENDED PRODUCT CANDIDATE GROUP FOR TOP TREE ITEMS AND GIVE EVALUATED VALUE

S2208 — DETERMINE THAT PRODUCT WITH HIGHEST EVALUATED VALUE IS RECOMMENDED PRODUCT

S2209 — SPECIFY PRICE OF RECOMMENDED PRODUCT

S2210 — CHANGE PRICE OF RECOMMENDED PRODUCT

S2211 — UPDATE PRODUCT INFORMATION OF RECOMMENDED PRODUCT

END

*FIG. 22*

## INTERNATIONAL SEARCH REPORT

| International application No. |
| --- |
| PCT/JP2018/039764 |

**A. CLASSIFICATION OF SUBJECT MATTER**
Int.Cl. G07F9/00(2006.01)i, G06Q30/06(2012.01)i

According to International Patent Classification (IPC) or to both national classification and IPC

**B. FIELDS SEARCHED**

Minimum documentation searched (classification system followed by classification symbols)
Int.Cl. G07F9/00-9/02, G06Q10/00-99/00

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2003-162757 A (NIPPON CONLUX CO., LTD.) 06 June 2003, paragraphs [0010]-[0044], fig. 1-4 & US 2004/0129778 A1, paragraphs [0016]-[0051], fig. 1-4 & WO 2003/046846 A1 & CN 1489754 A & KR 10-2003-0070121 A | 1-9 |
| Y | JP 9-293166 A (HITACHI, LTD.) 11 November 1997, paragraphs [0001]-[0021], fig. 1-10 (Family: none) | 1-5, 7-9 |

☒ Further documents are listed in the continuation of Box C.        ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 10.01.2019 | 29.01.2019 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| International application No. |
| --- |
| PCT/JP2018/039764 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 6-52446 A (FUJITSU LIMITED) 25 February 1994, paragraphs [0001]-[0030], fig. 1-6 (Family: none) | 2, 4 |
| Y | JP 2008-176507 A (HITACHI, LTD.) 31 July 2008, paragraphs [0001]-[0108], fig. 1-14 (Family: none) | 3, 5 |
| Y | JP 2016-133993 A (SHARP CORPORATION) 25 July 2016, paragraphs [0025]-[0123], fig. 1-12 (Family: none) | 6-9 |
| A | JP 2002-63532 A (ANNEX SYSTEMS INCORPORATED) 28 February 2002 & US 2002/0007323 A1 & EP 1162580 A2 | 1-9 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002216046 A